(19) Europäisches Patentamt / European Patent Office / Office européen des brevets

(11) **EP 2 018 048 A1**

(12) **EUROPEAN PATENT APPLICATION**
published in accordance with Art. 153(4) EPC

(43) Date of publication:
**21.01.2009 Bulletin 2009/04**

(21) Application number: **07741734.3**

(22) Date of filing: **16.04.2007**

(51) Int Cl.:
**H04N 5/232** (2006.01)    **G03B 5/00** (2006.01)

(86) International application number:
**PCT/JP2007/058298**

(87) International publication number:
**WO 2007/129533 (15.11.2007 Gazette 2007/46)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **09.05.2006 JP 2006130638**

(71) Applicant: **Sharp Kabushiki Kaisha
Osaka-shi, Osaka 545-8522 (JP)**

(72) Inventor: **TAKEDA, Mitsuhiko
Midori-ku, Chiba-shi, Chiba 2660031 (JP)**

(74) Representative: **Müller - Hoffmann & Partner
Patentanwälte
Innere Wiener Strasse 17
81667 München (DE)**

(54) **IMAGING DEVICE**

(57) Conventionally, when generating an image in which hand-shake is suppressed, by combining a plurality of images, an image quality may be degraded by performing a combination process even in the illuminance condition when no hand-shake occurs and the linear characteristic of luminance information may be deteriorated when combining a plurality of images, some which are inappropriately exposed. In order to solve these problems, it is possible to provide an imaging device capable of combining a first image of a size smaller than a target image obtained by pixel addition average and pixel addition with a second image having an amplified gain to obtain an appropriate exposure and a plenty of noise, so as to generate the target image and capable of varying the synthesis ratio of the first image and the second image according to the temperature condition and the like so as to obtain an image in which no hand-shake or blur is contained under any illuminance condition and noise is suppressed.

Fig. 1

## Description

## BACKGROUND OF THE INVENTION

## Field of the Invention

The present invention relates to an imaging apparatus imaging a still image, and more specifically, to a technology of correcting image blurring.

## Description of the Related Art

In Japanese unexamined patent application publication No. 2005-209249, an imaging device, in which a small image such as a preview image utilized for a preview display (hereinafter, referred to as 'first image') and an image acquired by a click of a shutter by a user of the imaging device (hereinafter, referred to as 'second image') are utilized, thereby carrying out correction, is disclosed.

In general imaging device, exposure control is performed based on brightness of the field upon imaging, thereby carrying out imaging with adequate exposure. However, as exposure time becomes longer by the setting of exposure control, a possibility of the occurrence of image blurring becomes higher. Meanwhile, in Japanese unexamined patent application publication No. 2005-209249, as to the first image, which is the small image such as a preview image, it is assumed that its exposure is adequate but image blurring can occur, and as to the second image, its exposure time is made to be shorter in order to reduce the chance of image blurring. Therefore, the second image does not include image blurring, but is underexposed, and the brightness of the second image is corrected by utilizing the brightness information of the image with adequate exposure such as the preview image.

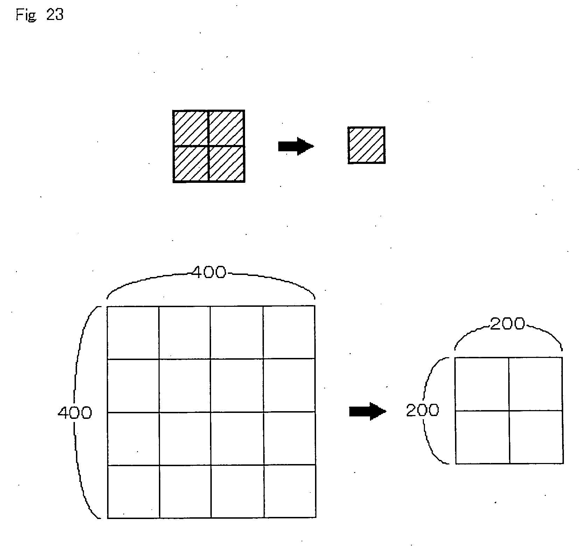

In addition, in Japanese unexamined patent application publication No. 2005-209249, a method for acquiring the small image such as a preview image by pixel addition is disclosed. The pixel addition is, for example, a method for converting four pixels into one pixel as shown in Fig. 23, and a value acquired by adding pixel values of the four pixels is set to a pixel value of the one pixel. For example, an image of 200 x 200 pixels is acquired by pixel addition of an image of $400 \times 400$ pixels. A merit of this pixel addition is that even if original images do not include enough brightness, a pixel value of the one pixel is acquired by adding pixel values of the four pixels, so that the image generated by the pixel addition includes sufficient brightness even if the shutter time is short. Moreover, for example, in the case of high-pixel CCD, as the entire size of the CCD becomes larger, the size of each pixel becomes smaller, thereby decreasing light received by each pixel. Therefore, sensitivity lowers. Moreover, if a signal is amplified in order to correct this, noise increases. However, according to the pixel addition, although image size becomes smaller, it is possible to acquire sufficient brightness without amplifying the signal even if the condition is low-illuminance condition with insufficient light, so that it is possible to acquire a good image with low noise.

Also in the case of the small image such as a preview image without the pixel addition, an image processed by averaging of adjacent pixels is usually used upon reducing size. Although the image blurring can occur, it is possible to acquire a good image with low noise similar to the pixel addition.

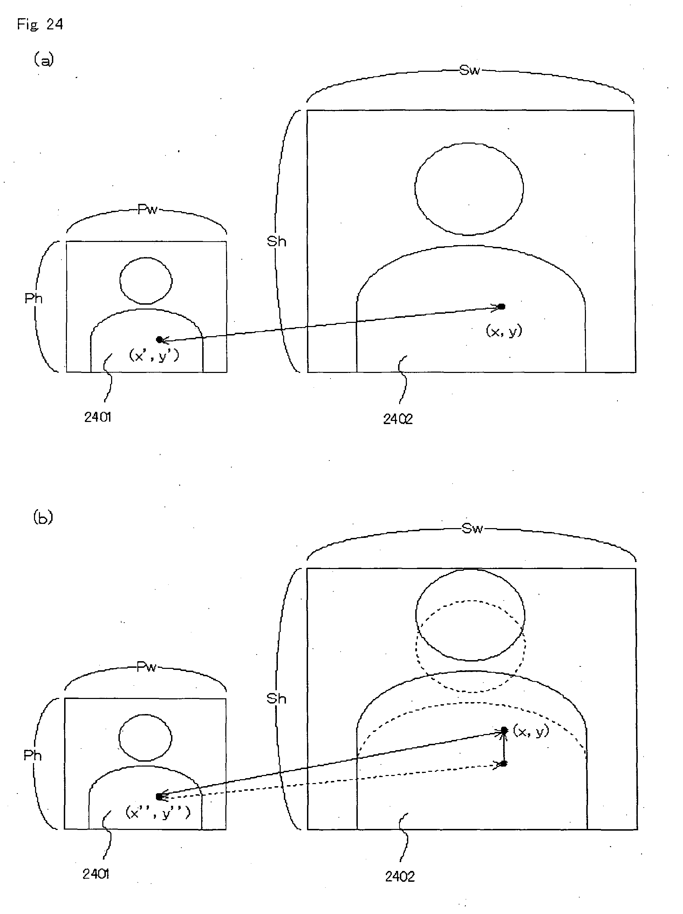

Fig. 24 shows a case where a first image (2401) and a second image (2402) are different in size. In addition, Fig. 24(a) shows a case where there is no positional difference between the first and second images, and Fig. 24( b ) shows a case where there is a positional difference between the first and second images. It is assumed that the height of the first image (2401) is Ph, and the width is Pw, and the height of the second image (2402) is Sh, and the width is Sw. At the outset, in Fig. 24(a), assuming that a pixel (x, y) of the second image (2402) corresponds to a pixel (x', y') of the first image (2401), there is no positional difference between them, so that x'= $\alpha$x, y'= $\beta$y. Here, $\alpha$ and $\beta$ are reduction ratios of the first and Second images in horizontal and vertical directions, respectively, and $\alpha$ = Pw/Sw, $\beta$ = Ph/Sh. In addition, in Fig. 24(b), it is assumed that the movement of the positional difference is (Mx, My) and a pixel (x, y) of the second image (2402) corresponds to a pixel (x", y") of the first image (2401), x'= $\alpha$x + Mx, y'= $\beta$y + My. Thus, it is possible to acquire a correspondence relation between the respective pixels of the first and second images. Therefore, by utilizing this correspondence relation, for example, it is possible to compare the brightness information of the respective pixels and to correct the brightness, thereby carrying out synthesizing. Note that, it is possible to detect the movement of the positional difference (Mx, My) by utilizing block matching or edge detection.

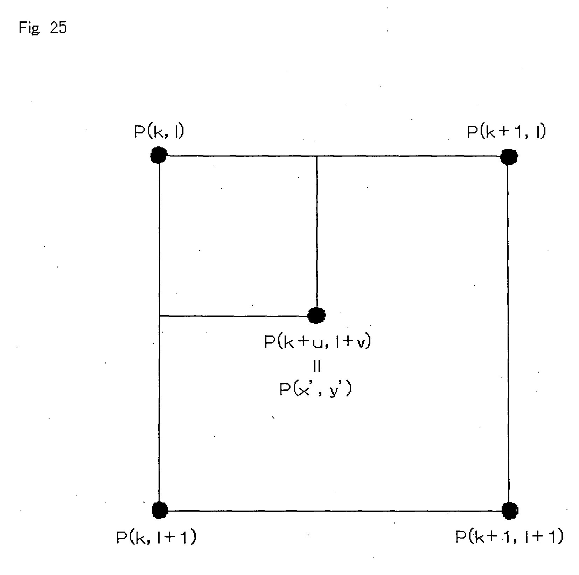

Fig. 25 shows a concrete example of the method for correcting brightness by comparing brightness information of respective corresponding pixels. As shown in Fig. 25, if motion of displacement is (Mx, My), and $\alpha$ =Pw/Sw, and $\beta$ =Ph/Sh, a relation between the first image (x',y'), and the second image (x,y) is expressed by a formula, x'=$\alpha$x+Mx, y'=$\beta$y+My (hereinafter, referred to as 'formula 1'). Normally, the brightness of a pixel varies in proportion to exposure time (e.g., if the exposure time is 2-fold, the brightness of pixel is also 2-fold), so that if pixel value (e.g., RGB value) of each pixel indicated by the image information of the second image is increased according to the ratio of the exposure time between the first image and second image, the brightness of the second image is equal to that of the first image. However, in this method, noise also increases. Hereat, a case, in which correction of pixel value is carried out by a method for decreasing noise components by linear interpolation to carry out averaging with the pixel value of the first image, is described. The linear interpolation is well known, so that description thereof has been omitted. Assuming that an integral part of x' acquired by the formula 1 is k, a fractional part is u, and an integral part of y' is 1, a fractional part is v, and a pixel value of the first image (x',y') is Pp(x',y'), the Pp(x',y.') can be acquired by utilizing the formula, Pp(x',y')=Pp(k+u,1+v)=Pp(k,1)(1-u)(1-v) +Pp(k+1,1)u(1-v)+Pp(k,1+1)(1-u)1+Pp(k+1,1+1)k1. Additionally, an amount of correction upon correction of brightness information of the second image is calculated as follows. It is assumed that an exposure time (exposure time of the first image), controlled by exposure control upon acquiring the first image in order to acquire correct exposure, is To, an exposure time (exposure time of the second image), controlled by exposure control upon acquiring the second image in order to decrease image blurring, is Tx, and Tr=Tx/To. In cases where a pixel value Ps(x,y) of the pixel (x,y) in the second image, a pixel value Pa(x,y) of the brightness information of the second image to be corrected is expressed by a formula, Pa(x, y)=(Pp(x',y')+Ps(x,y). Tr)/2. Accordingly, it is possible to correct the Pa(x,y) of the brightness information of the second image by utilizing the pixel value Pp(x',y') of the first image and the pixel value Ps(x,y) of the second image.

In addition, in Japanese unexamined patent application publication No. 2004-235901, an imaging apparatus is disclosed. Therefore, in the case of high-illuminance condition, where enough brightness is provided, normal photographing is carried out, and in cases where it is determined that an object is a low-brightness object, and it is determined based on comparison between output images of adjacent fields of a color image sensor that the differences between the output images are small and motion of the object is small, it is possible to photograph a picture with good S/N ratio by adding same-color pixels in the respective fields without worrying about camera shake even when an object is an object under low-illuminance condition.

However, in the method disclosed in Japanese unexamined patent application publication No. 2005-209249, when synthesizing is carried out by means of the first and second images, size is reduced in order to reduce noise components, so that the high-frequency components of the first image is reduced, and the first image becomes blurry. The averaging is always carried out by means of the first image, so that, even if the second image is imaged with short exposure time and without image blurring under high-illuminance condition with sufficient light, the high-frequency components of the second image is reduced, and the edges become dull, thereby causing degradation of image quality despite the correction for image blurring. Note that the above-mentioned terms, 'under high-illuminance condition with sufficient light', means a condition, in which, if the exposure time to avoid image blurring is shorter than 1/60 sec., the exposure time is controlled to be shorter than 1/60 sec. upon acquisition of a target image by the imaging control unit.

In addition, in the method disclosed in Japanese unexamined patent application publication No. 2005-209249, the first image with adequate exposure and the second image, which is with underexposed but image blurring is reduced, are utilized, and when acquiring an image, in which image blurring is reduced only by correcting the brightness information of the second image by means of the brightness information of the first image, the second image is corrected by multiplying ratio between the exposure time of the first image and the exposure time of the second image, and is averaged with the first image, thereby acquiring an adequate exposure. However, in this method, an actual imaging portion is gamma-corrected in the imaging process, and linear characteristics of the brightness information are changed, so that if the synthesizing is carried out just by the multiplication, brightness information different from actual brightness information is synthesized, thereby generating an unnatural image. For example, a method, in which a gamma-correction is inversely carried out for the gamma-corrected portion, calculation of the ratio of exposure time and averaging are carried out, and gamma-correction is carried out again, can be used, but a heavy load is required for implementation thereof in terms of hardware and software.

In cases where not the method disclosed in Japanese unexamined patent application publication No. 2005-209249 but the method disclosed in Japanese unexamined patent application publication No. 2004-235901 is used, image blurring is avoided by correction for image blurring under high-illuminance condition with sufficient light. Meanwhile, it is determined that illuminance is below a specific illuminance condition, in which the image blurring occurs in normal imaging (this means that the object is determined as a low-illuminance object in Japanese unexamined patent application publication No. 2004-235901), and if it is determined that the motion of the object is small, the addition of three fields is carried out immediately, so that size of the image becomes smaller, brightness of the image suddenly becomes 3 times higher by the addition, or the high-frequency components are reduced by the addition, thereby causing inconvenience and bad image quality.

In the method disclosed in Japanese unexamined patent application publication No. 2005-209249, even if it is controlled that normal imaging is carried out under the high-illuminance condition with sufficient light or image blurring correction is carried out under low illuminance condition, in which image blurring can occur in the normal imaging, if the illuminance is higher than the specific illuminance, in which the image blurring occurs, a high-quality image having many high-frequency components is generated, and if the illuminance is lower than the specified brightness, a low-quality image having few high-frequency components is generated. Therefore, small changes of brightness cause large changes of image quality, thereby causing unnaturalness.

Moreover, if the synthesizing of the second image in a state in which gain is amplified is carried out in order to compensate for underexposure due to short exposure time under a certain level of low-illuminance condition, even if noise is reduced by a higher ratio of the first image used for the synthesizing under the certain level of low-illuminance condition, noise components clearly appear in a dark portion of an object with insufficient light.

Furthermore, if the synthesizing of the second image in a state in which gain is amplified is carried out in order to compensate for underexposure due to short exposure time under a certain level of low-illuminance condition, even if noise is reduced by a higher ratio of the first image used for the synthesizing under the certain level of low-illuminance condition, it becomes impossible to suppress noise depending on a rise in temperature of an imaging unit, thereby causing low quality of image unsuitable for normal use.

## SUMMARY OF THE INVENTION

In the present invention, the control of imaging, which is capable of controlling imaging conditions differently depending on the illuminance condition, is carried out, so that it is possible to correct image blurring by synthesizing image information of an image by partially utilizing the image information of a plurality of images when the condition is a low-illuminance condition, in which image blurring possibly occurs, or to set an image with no change, imaged under the imaging condition, as a target image when the condition is a high-illuminance condition with sufficient light.

In another aspect of the present invention, in cases where the correction of image blurring is carried out by synthesizing image information of an image by partially utilizing the image information of a plurality of images when the condition is a low-illuminance condition causing image blurring, synthesizing ratios between plurality of images are variable according to the imaging conditions, so that it is possible to stop causing unnaturalness, in which if the brightness is higher than the specified brightness causing the image blurring, a high-quality image having many high-frequency components is generated, and if the brightness is lower than the specified brightness, a low-quality image having few high-frequency components is generated, and a small change of brightness causes large change of image quality.

In another aspect of the present invention, in cases where the synthesizing of the second image in a state in which a gain is amplified is carried out in order to compensate for underexposure due to short exposure time under a certain level of low-illuminance condition, for the dark portion of the object with insufficient light, it is possible to acquire high-quality image with suppressed noise by increasing the ratio of the first image including less noise used for the synthesizing.

In another aspect of the present invention, in cases where the synthesizing of the second image in a state in which a gain is amplified is carried out in order to compensate for underexposure due to short exposure time under a certain level of low-illuminance condition, it is possible to acquire a high-quality image with suppressed noise by increasing ratio of the first image including less noise used for the synthesizing according to a rise in temperature of an imaging unit, even if the temperature rises in the imaging unit.

In another aspect of the present invention, in cases where the synthesizing of the second image in a state in which gain is amplified is carried out in order to compensate for underexposure due to a short exposure time under a certain level of low-illuminance condition, edge information is acquired from an image having less noise, and it is possible to carry out synthesizing, in which larger ratio of the image having less noise is used for area including no edge information, thereby acquiring high-quality image with suppressed noise in the area including no edge information.

In another aspect of the present invention, it is possible to acquire moving area information from a plurality of images, and to carry out synthesizing, in which an image having less noise is used for the moving area, thereby acquiring a high-quality image with suppressed noise in the moving area.

In another aspect of the present invention, in cases where the synthesizing of the second image in a state in which gain is amplified is carried out in order to compensate for underexposure due to a short exposure time under a certain level of low-illuminance condition, it is possible to carry out synthesizing brightness information and color information separately, thereby acquiring an image with suppressed noise, processed by image blurring correction, according to occurrence of brightness noise or of color noise.

According to the imaging apparatus of the present invention, it is possible to carry out or to not carry out synthesizing for correction of image blurring according to illuminance, and to vary the synthesizing ratio between the plurality of images upon the correction of image blurring according to the illuminance, so that it is possible to maintain the best quality of image with suppressed noise according to the condition, and to acquire the desired image with suppressed noise.

Moreover, in cases where image blurring correction is carried out by synthesizing according to the illuminance, although as the illuminance decreases, or, as the temperature rises noise increases due to amplification of gain, it is possible to carry out synthesizing for appropriately suppressing noise according to a condition of an object (e.g., bright portion or dark portion, edge portion or not, or moving object or not, etc.), thereby enabling high-quality imaging even under the low-illuminance condition.

## BRIEF DESCRIPTION OF THE DRAWINGS

Fig. 1 is a functional block diagram of an imaging apparatus of a first embodiment.

Fig. 2 is a functional block diagram of an imaging apparatus of the first embodiment.

Fig. 3 is a diagram showing an example of exposure control by first control means.

Fig. 4 is a diagram showing an example of exposure control by second control means.

Fig. 5 is a diagram showing an outline in cases where synthesizing is carried out by means of a first image and a second image in a synthesizing unit.

Fig. 6 is a flowchart showing processing of the imaging apparatus of the first embodiment.

Fig. 7 is a diagram showing a concrete configuration of the imaging apparatus.

Fig. 8 is a functional block diagram of an imaging apparatus of a second embodiment.

Fig. 9 is a diagram showing an example of exposure control by second control means and multiplier coefficient control of the second embodiment.

Fig. 10 is a functional block diagram of an imaging apparatus of a third embodiment.

Fig. 11 is a diagram showing an example of multiplier coefficient control of the third embodiment.

Fig. 12 is a functional block diagram of an imaging apparatus of a fourth embodiment.

Fig. 13 is a diagram showing an example of multiplier coefficient control of the fourth embodiment.

Fig. 14 is a flowchart showing processing of the imaging apparatus of the fourth embodiment.

Fig. 15 is a functional block diagram of an imaging apparatus of a fifth embodiment.

Fig. 16 is a diagram explaining a secondary differentiation filter.

Fig. 17 is a diagram showing an example of multiplier coefficient control of the fifth embodiment.

Fig. 18 is a functional block diagram of an imaging apparatus of a sixth embodiment.

Fig. 19 is a diagram showing a method for generating moving area information.

Fig. 20 is a diagram showing an example of multiplier coefficient control of the sixth embodiment.

Fig. 21 is a functional block diagram of an imaging apparatus of a seventh embodiment.

Fig. 22 is a diagram showing an example of exposure control by second control means and multiplier coefficient control of the seventh embodiment.

Fig. 23 is a diagram explaining pixel addition.

Fig. 24 is a diagram showing an outline in cases where synthesizing is carried out by means of a first image and a second image in a synthesizing unit.

Fig. 25 is a diagram of a concrete example of a method for correcting brightness information of the second image.

Fig. 26 is a diagram showing an example of exposure control by second control means and multiplier coefficient control of the seventh embodiment.

## DETAILED DESCRIPTION OF THE INVENTION

Embodiments of the present invention will be described hereinbelow with reference to the drawings. The present invention is not to be limited to the above embodiments and able to be embodied in various forms without departing from the scope thereof.

### <<First embodiment>>

<Concept of First Embodiment>

A first embodiment is an imaging apparatus, in which it is determined whether or not synthesizing for correcting image blurring is carried out, and upon synthesizing for correcting image blurring, a plurality of images imaged under various imaging conditions are utilized, thereby carrying out synthesizing in order to acquire an image with no image blurring.

<Configuration of First Embodiment>

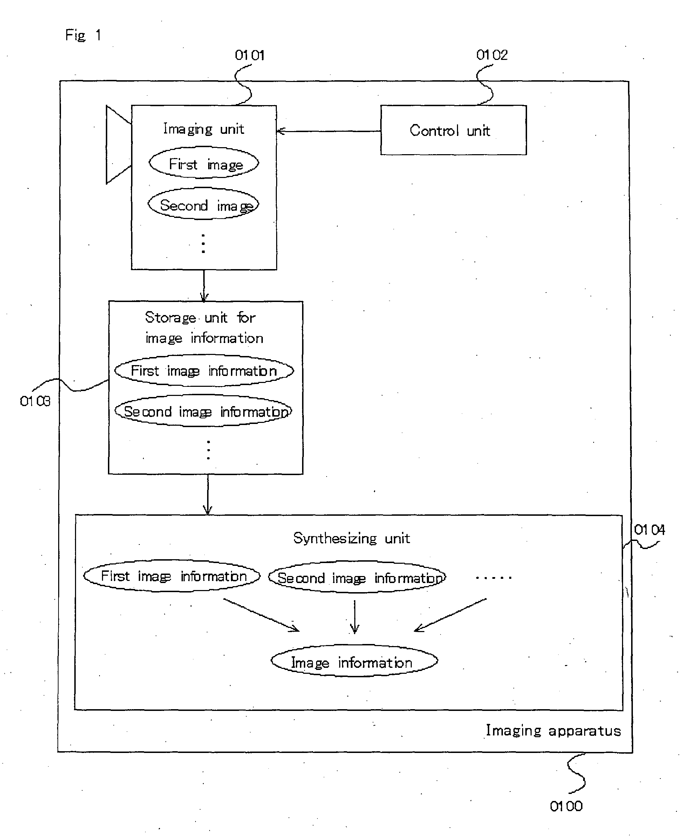

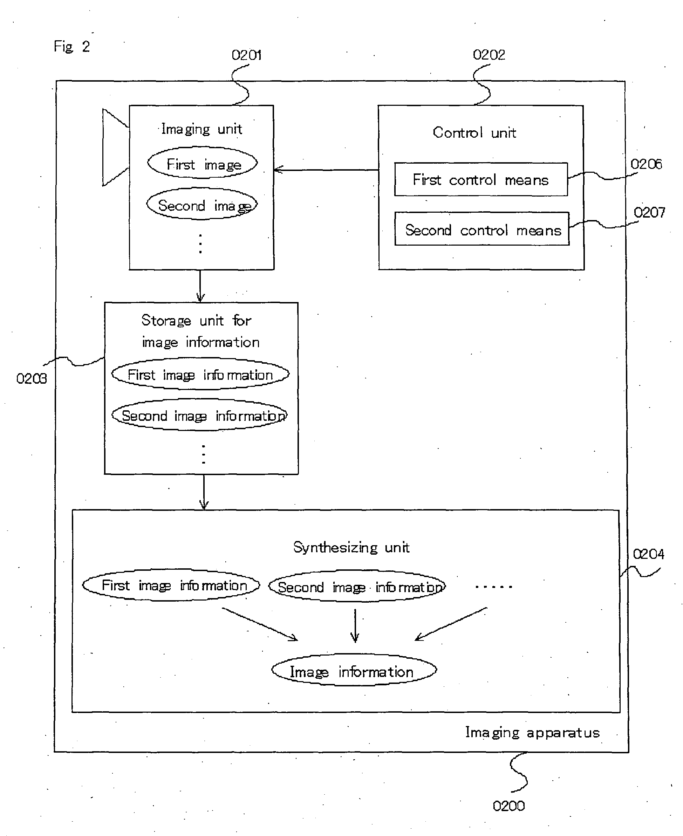

Fig. 1 and 2 are functional block diagrams of an imaging apparatus of the first embodiment. As shown in Fig. 1, an imaging apparatus (0100) comprises an 'imaging unit' (0101), a 'control unit' (0102), a 'storage unit for image information' (0103), and a 'synthesizing unit' (0104).

In addition, as shown in Fig. 2, an imaging apparatus (0200) comprises an 'imaging unit' (0201), a 'control unit' (0202), a 'storage unit for image information' (0203), and a 'synthesizing unit' (0204), and the control unit (0202) may comprise a 'first control means' (0206), and a 'second control means' (0207).

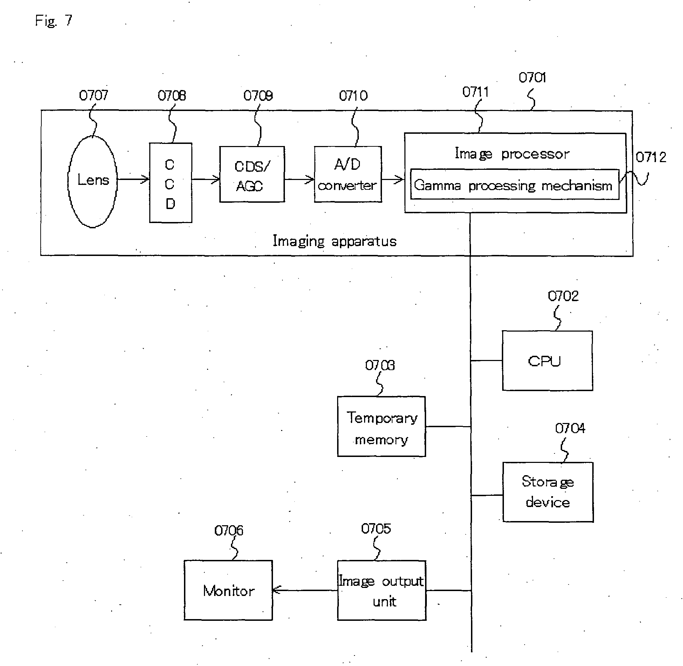

The respective units of the present invention are configured by hardware, software, or both hardware and software. For example, in the case of using a computer, the respective units are implemented by the hardware configured by a CPU, a memory, a bus, an interface, and other peripheral devices etc., and by the software operable on the hardware. As to the software, by sequentially carrying out programs on the memory, the data on the memory and the data inputted via the interface are processed, stored, and outputted etc., thereby implementing functions of the respective units. Specifically, Fig. 7 is a diagram showing a concrete configuration of the imaging apparatus, and shows an imaging unit (0701), a CPU (0702), a temporary memory (0703), a storage device (0704), an image output unit (0705), and a monitor (0706) etc. Additionally, Fig. 7 shows that the imaging unit (0701) comprises, a 'lens' (0707), a 'CCD (Charge Coupled Device)' (0708), 'CDS/AGC (Correlated Double Sampling/Auto Gain Control)' (0709), a 'A/D converter' (0710), and a 'image processor' (0711) etc. Moreover, the image processor (0711) may comprise a 'gamma correction mechanism' (0712). (The same is applied through the entire specification).

Hereinafter, descriptions of the respective components will be provided.

The 'imaging unit' (0101) has a function of imaging an object. The term 'imaging' means, specifically in Fig. 7, light from the object is received by an imaging sensor such as the CCD (0708) etc. through an optical device such as the lens (0707), process is carried out through CDS/AGC (0709) including the CDS, which reduces noise of the CCD (0708), and the AGC, which amplifies signal and increases sensitivity in order to compensate for degradation of exposure, the A/D converter etc. carries out conversion to electrical signal, and further process is carried out through the image processor (0711), which carries out exposure control and white balance control, and the gamma correction mechanism (0712), thereby carrying out processing of brightness and color signals and generating image information. Additionally, the imaging unit may include a program for carrying out the above processes. Moreover, the imaging unit carries out imaging based on imaging condition. Specifically, examples of the 'imaging condition' include exposure time (same meaning as the 'shutter speed'), imaging interval between a plurality of images, gain condition for increasing the gain (same meaning as the 'gain' of the AGC), condition of controlling size reduction, which indicates whether size reduction by averaging or pixel addition is carried out in the imaging unit, imaging condition indicating whether the image is an image is used for synthesizing for image blurring correction, and size condition (can be defined by 'reduction ratio' etc.).

The 'control unit' (0102) controls imaging according to imaging condition including exposure time and gain, which vary depending on brightness. The term 'according to imaging condition' corresponds to reading out of the imaging condition, which has been set, and to control so that imaging is carried out by the imaging unit (0101) based on the imaging condition, which has been read out. Additionally, a function of determining the imaging condition may be included. The determination of imaging corresponds specifically to the exposure time, to the imaging interval or to the determination as to whether size reduction control is carried out etc. For example, setting an exposure time for adequate exposure is calculated from surrounding brightness etc. as in the conventional camera, and is set to the exposure time upon imaging, or gain control for amplifying signal level by AGC is carried out in cases where degradation of exposure amount occurs in spite of longer exposure time. In addition, in image blurring correction, the control of size reduction etc. by averaging or pixel addition in the imaging unit may be included in order to implement accurate positioning or to improve S/N ratio or sensitivity in images for correction. As to the exposure time, imaging interval, and gain control, in the size reduction control by averaging or pixel addition, for example, the gain is controlled to be preliminarily higher, and the exposure time is controlled to be shorter, thereby suppressing image blurring, or in cases where there is high possibility of image blurring due to length of adequate exposure time, the exposure time is controlled to be shorter, and more gain is amplified, thereby acquiring adequate exposure. As a concrete process in the control unit, for example, values of the exposure time and the imaging interval etc. are stored in the predetermined storage area such as a temporary memory (0703) or a storage device (0704) in Fig. 7, and setting values are read out from the predetermined storage area, thereby controlling the imaging in the imaging unit in accordance with the read-out values. In addition, the control unit may include a program for causing a CPU (0702) to carry out the above processes.

In addition, as shown in Fig. 2, the control unit (0202) may comprise the 'first control means' (0206) and the 'second control means' (0207).

The 'first control means' (0206) has a function of control so that a first image, one of a plurality of images to be imaged, is smaller in size than other images of the plurality images, and is imaged with adequate exposure. For example, the term 'image has smaller size than other images of the plurality images' means 1/n the size of other image. Moreover, the first control means may control so that the first image, one of the plurality of images to be imaged, is smaller in size than other images of the plurality images by pixel averaging or pixel addition, and the exposure time is reduced according to S/N ratio improved by the pixel averaging or pixel addition.

The 'second control means' (0207) has a function of control by short exposure time, in which image blurring cannot occur, and by amplifying the gain, so that a second image, one of a plurality of images to be imaged, is imaged with adequate exposure. The term 'by short exposure time, in which image blurring cannot occur' means, for example, generally, in cases where edge blurring due to camera shake cannot be recognized in the exposure time, which is shorter than about 1/60 sec. (16 mm/sec.), the exposure time corresponds to 1/60 sec. The image size of the second image is an image size to be acquired by imaging.

The 'storage unit for image information' (0103) has a function of storing image information of one or a plurality of images imaged under various imaging conditions controlled by the control unit (0102). The 'one or a plurality of images imaged under various imaging conditions' corresponds, for example, to the first image, which is imaged under control of the first control means (0206), and to the second image, which is imaged under control of the second control means (0207) etc. Note that, in the synthesizing unit (0104), in cases where there are positional differences between the imaging positions of the plurality of images, it is necessary to carry out synthesizing of the plurality of images after adjusting the positional differences. However, the concrete description thereof has been provided in the description of the related art, so that it has been omitted. In addition, the 'imaging information' is information for generating an image, and specifically means information expressed by numerals such as RGB value or YUV value of each pixel. It has been known that brightness information (Y) and color information (UV) are expressed by RGB value, and approximately can be acquired by the following formulas, 'Y = 0.299R + 0.587G + 0.114B (hereinafter, referred to as 'formula 2')', 'U = -0.169R - 0.331G + 0.500B', and 'V = 0.500R - 0.419G - 0.081B'. Therefore, it is possible to say that the brightness information and the color information are included in the image information. Specifically, the storage unit is mainly configured by the temporary memory (0703) and the storage unit (0704) in Fig. 7. Moreover, the storage unit for image information may include a program for causing a CPU (0702) to carry out the above processes for storing the image information.

The 'synthesizing unit' (0104) has a function of synthesizing image information for a synthesized image by partially utilizing the stored image information of the plurality of images, or outputs an image with no change, imaged under the imaging condition, according to the brightness. For example, in cases where it is determined whether the synthesizing is carried out according to the brightness, and if synthesizing is carried out, it is assumed that synthesizing of image information for a synthesized image is carried out by partially utilizing the image information from the image information 1 and the imaging condition 1 of the first image, and the image information 2 and the imaging condition 2, which have been outputted from the storage unit for image information (0103). The term 'by partially utilizing the stored image information of the plurality of images' means that it is not necessary to utilize all of image information upon the synthesizing. For example, it is assumed that synthesizing is carried out by correcting RGB value and YUV value of a portion of an image upon correcting only the portion of the image. In addition, the 'synthesized image' is a target image to be acquired ultimately, and is an image with reduced image blurring. The synthesizing unit acquires information, which indicates that, for example, a plurality of images exist, the respective images utilized for synthesizing, and the first image is 1/n size of the second image, thereby partially utilizing the image information, and generating the image information of the synthesized image. Moreover, the synthesizing unit may include a program for causing a CPU (0702) to carry out the above processes.

(Concrete example of control under illuminance condition, in which image blurring possibly occurs)

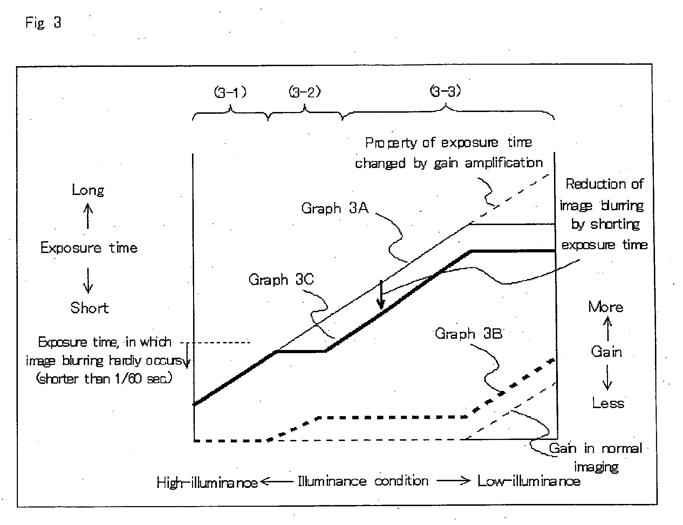

Hereinafter, concrete examples of control under illuminance condition, in which image blurring possibly occurs, will be described. At the outset, a control to acquire adequate exposure of the first image by the first control means will be described with reference to Fig. 3. Generally, in the case of control to acquire adequate exposure according to the brightness of imaging condition, there is high possibility of image blurring due to camera shake. The reason for this is that in the exposure control status (3-3) under the low-illuminance condition, the exposure time becomes longer than that in the exposure control status (3-1) under the high-illuminance condition, so that there is high possibility of image blurring. As described above, since the first control means controls so as to generate an image smaller than other images, it is expectable that S/N ratio is improved by utilizing averaging process upon generating the small image. If number of pixels to be added is n, the noise level to be improved by the averaging is by $1 / \sqrt{n}$ times, and if it is not expected to improve the S/N ratio, even if the gain is amplified by $\sqrt{n}$ times, the S/N ratio after the amplification of gain is not different from the S/N ratio before the averaging. Therefore, in cases where a priority is given to suppress of image blurring also in the first image, the gain can be amplified $\sqrt{n}$ by times (graph 3B), and the exposure time can be reduced by $1 / \sqrt{n}$ times. Therefore, the first control means controls the imaging condition so as to acquire an image with adequate exposure and with the least image blurring.

Note that when the first control means controls so as to generate a smaller image than the second image, if the pixel addition is controlled, the averaging process is not carried out, and it is necessary to make the exposure time 1/n times in order to acquire an image with adequate exposure without amplifying gain. Therefore, in the case of pixel addition, if the same level of S/N ratio as that in the case where adequate exposure is acquired according to the brightness of the imaging condition is allowed, it is possible to make the exposure time 1/n times, and to acquire an image with further reduced image blurring.

In addition, in cases where the small image is generated by averaging without pixel addition, or in cases where the small image is generated by pixel addition, if the width of edge, at which image blurring has occurred, is small, averaging or addition process is carried out for the portion including the edge pixel, at which the image blurring has occurred, so that it is slightly expected that the edge pixel, at which the image blurring has occurred, is deleted, thereby reducing the image blurring.

In the first control means, as the imaging condition, for example, the exposure time is 'an exposure time, in which image blurring is suppressed', the imaging interval between the plurality of images is the 'smallest imaging interval to implement the exposure time, in which image blurring is suppressed', the gain condition for increasing sensitivity is $\sqrt{n}$ times (n times in the case of pixel addition) higher value than that in the normal control', as to whether the size reduction by averaging or pixel addition by the imaging unit is carried out, 'size reduction control is to be carried out', as to whether it is an image utilized for synthesizing in order to carry out image blurring correction, 'image for synthesizing 1', and as to size, 'reduction ratio is 1/n of the other image'. The above imaging conditions are stored, for example, as the imaging condition 1.

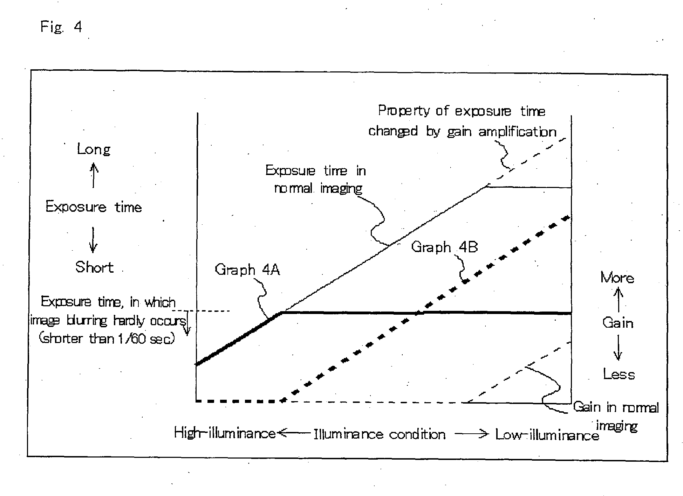

Subsequently, a control by the second control means to acquire the adequate exposure will be described with reference to Fig. 4. In Fig. 4, the short exposure time, in which image blurring does not occur' is 1/60 sec. For example, the second control means keeps the exposure time 1/60 sec. even under the low-illuminance condition (graph 4A), and amplifies the gain for compensation, thereby acquiring adequate exposure (graph 4B). Therefore, under the low-illuminance condition, the image acquired by the second control means includes many noises because its S/N ratio is low, and further, gain is amplified. Therefore, the second control means carries out control so as to acquire an image with adequate exposure and with the least image blurring as in the first control means, but which includes many noises depending on brightness.

In the second control means, as the imaging condition, for example, the exposure time is 'an exposure time, in which image blurring hardly occurs', the imaging interval between the plurality of images is 'smallest imaging interval to implement the exposure time, in which image blurring hardly occurs', the gain condition for increasing sensitivity is 'much higher value', as to whether the size reduction by averaging or pixel addition by the imaging unit is carried out, 'size reduction control is to not be carried out', as to whether it is an image utilized for synthesizing in order to carry out image blurring correction, 'image for synthesizing 2', and as to size, 'size of an image to be acquired by photographing'. The above imaging conditions are stored, for example, as the imaging condition 2.

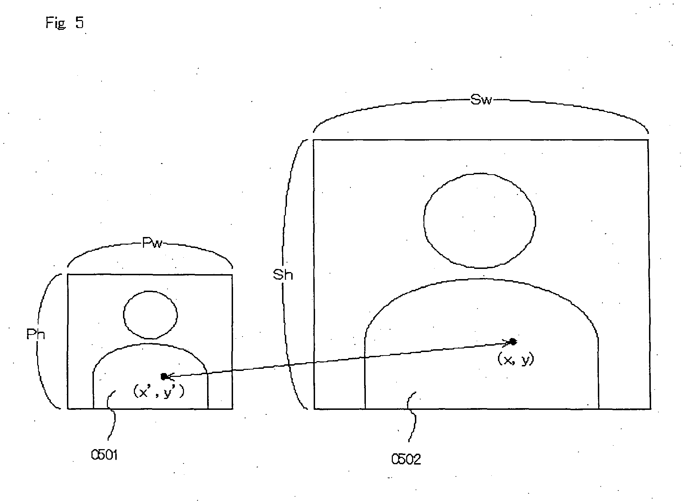

Subsequently, an outline in cases where synthesizing is carried out by means of a first image and a second image in a synthesizing unit will be described with reference to Fig. 5. In Fig. 5, the case where the first image (0501) and the second image (0502) have different sizes is cited as an example. Moreover, although there is a case where positional differences between the first and the second images exist, a concrete description thereof has been provided in the description of the related art, so that it has been omitted. It is assumed that the height of the first image (0501) is Ph, and the width is Pw, and the height of the second image (0502) is Sh, and the width is Sw. At the outset, assuming that a pixel (x, y) of the second image (0502) corresponds to a pixel (x', y') of the first image (0501), there is no positional difference between them, so that x'= ax, y'= βy. Here, α and β are reduction ratio of the first and second images in horizontal and vertical directions, respectively, and α = Pw/Sw, β = Ph/Sh. In the first embodiment, the exposure level (= level of the brightness information) of the first image acquired by the first control means and the exposure level of the second image acquired by the second control means are appropriately processed through the gain control etc. by the first control means and the second control means, so that they have the same exposure level, and it is not necessary to correct the brightness information upon synthesizing. In addition, as described above, the first image acquired by the first control means is an image with image blurring suppressed by the size reduction and pixel addition, and the second image acquired by the second control means is an image with low image blurring, but which includes many noises due to gain amplification in order to acquire the adequate exposure. In this embodiment, a simple averaging is utilized for synthesizing these two images.

In cases where a pixel value of the pixel (x', y') in the first image is Pp(x', y'), a pixel value of the pixel (x, y) in the second image is Ps(x, y), a pixel value of the pixel (x, y) in the synthesized image for image blurring correction is P(x, y), Pp(x, y) = (Pp(x', y') + Ps(x, y)/2. Accordingly, it is possible to correct the second brightness information by the pixel value P(x, y) by utilizing the pixel value Pp(x', y') as the first brightness information and the pixel value Ps(x, y) as the second brightness information.

(Concrete example of control under illuminance condition, in which image blurring hardly occurs)

Subsequently, a concrete example of control under illuminance condition, in which image blurring hardly occur, will be described. Note that descriptions about the same portions as those of the above-mentioned concrete example of control under illuminance condition, in which image blurring can occur, are omitted, and descriptions about different portion will be provided.

At the outset, in the control unit, it is determined whether the information of the exposure time calculated as the exposure time of adequate exposure according to surrounding brightness etc. is the 'exposure time, in which image blurring possibly occurs' or the 'exposure time, in which image blurring hardly occurs'. As a concrete example, the value such as the exposure time acquired by the imaging unit is stored in the predetermined storage area such as the temporary memory (0705) or the storage device (0706) in Fig. 7, the CPU (0702) reads out the setting value from the predetermined storage area. In addition, the temporary memory (0705) and the storage device (0706) have the information of the 'exposure time, in which image blurring possibly occurs' or the 'exposure time, in which image blurring hardly occurs', and the CPU (0702) determines whether the exposure time acquired by the imaging unit is the 'exposure time, in which image blurring possibly occurs' or the 'exposure time, in which image blurring hardly occurs'. It is assumed that ' the exposure time is shorter than the 'exposure time, in which image blurring hardly occurs', for example, the above-mentioned 1/60 sec. (16 mm/sec.) as a result of the determination.

In this case, the first control means controls so that the number of images to be imaged is one, and the first image is to be an image of adequate exposure. The size reduction control is not carried out, and since light amount is sufficient, the gain control is also unnecessary. Therefore, the first control means controls the imaging condition so as to acquire an image with adequate exposure, with low noise, and with the least image blurring.

In addition, in the first control means, as the imaging condition, for example, the exposure time is 'an exposure time, in which image blurring hardly occurs', the imaging interval between the plurality of images is 'smallest imaging interval to implement the exposure time, in which image blurring hardly occurs', the gain condition for increasing sensitivity is '0', as to whether the size reduction by averaging or pixel addition by the imaging unit is carried out, 'size reduction control is to not be carried out', as to whether it is an image utilized for synthesizing in order to carry out image blurring correction, 'image not for synthesizing', and as to size, 'size of an image to be acquired by photographing'. The above imaging conditions are stored, for example, as the imaging condition 1.

In addition, the storage unit for image information stores the image information of the one image, which has been imaged under control by the first control means of the control unit (0102).

In addition, the synthesizing unit can determine that the synthesizing is not carried out according to the brightness, so that the image information 1 is outputted with no change as the target image.

<Processing Flow of First Embodiment>

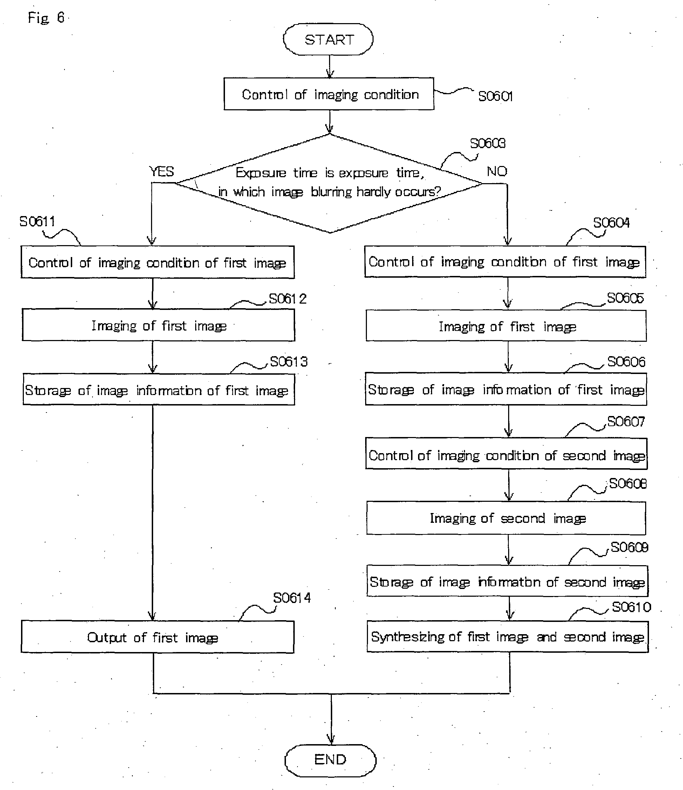

Fig. 6 is a flowchart showing processing of the imaging apparatus of the first embodiment. The imaging apparatuses carries out processing in Fig. 6 every time a user clicks a shutter etc. and an object is imaged.

At the outset, the control of the imaging condition is carried out. This process is carried out by the control unit (a control step S0601). Subsequently, it is determined based on the imaging condition controlled by the control step (S0601) whether the exposure time necessary to acquire a target image is an exposure time; in which image blurring hardly occurs. This process is carried out by the control unit (a determination step S0603).

As a result of the determination by the determination step (S0603), in cases where the exposure time is not the exposure time, in which image blurring hardly occurs (process shifts to NO in Fig. 6), the control is carried out, so that the first image is imaged in the exposure time, in which image blurring is reduced, and with adequate exposure by amplifying gain, and the first image has a smaller size than that of the second image. This process is carried out by the first control means (a first control step S0604). Subsequently, the imaging is carried out under the imaging condition controlled by the first control step (S0604). This process is carried out by the imaging unit (an imaging step for first image S0605). Subsequently, the image information of the first image, which has been imaged by the imaging step for first image (S0605) is stored. This process is carried out by the storage unit for image information (a storing step for first image information S0606). Subsequently, the control is carried out, so that the second image is imaged in the exposure time, in which no image blurring occurs, and with adequate exposure by amplifying gain, and the second image is the same size as that of a target image. This process is carried out by the second control means (a second control step S0607). Subsequently, the imaging is carried out under the imaging condition controlled by the second control step (S0607). This process is carried out by the imaging unit (an imaging step for second image S0608). Subsequently, the image information of the second image, which has been imaged by the imaging step for second image (S0608) is stored. This process is carried out by the storage unit for image information (a storing step for second image information S0609). Subsequently, the first image and the second image are synthesized, thereby generating the target image. This process is carried out by the synthesizing unit (a synthesizing step S0610).

As a result of the determination by the determination step (S0603), in cases where the exposure time is the exposure time, in which image blurring hardly occurs (process shifts to YES in Fig. 6), the control is carried out, so that the first image is imaged in the exposure time, in which image blurring hardly occurs, and with adequate exposure, and the first image has the same size as that of a target image. This process is carried out by the first control means (a first control step' S0611). Subsequently, the imaging is carried out under the imaging condition controlled by the first control step' (S0611). This process is carried out by the imaging unit (an imaging step' for first image S0612). Subsequently, the image information of the first image, which has been imaged by the imaging step' for first image (S0612) is stored. This process is carried out by the storage unit for image information (a storing step' for first image information S0613). Subsequently, the first image is outputted with no change, thereby generating the target image. This process is carried out by the synthesizing unit (an outputting step S0614).

<Brief Description of Effects of First Embodiment>

In the imaging apparatus of the first embodiment, in cases where normal imaging is possible with the exposure time, in which image blurring hardly occurs, it is possible to acquire an image, which includes few image blurring and low noise, without gain amplification, and in cases where normal imaging is not possible with the exposure time, in which image blurring hardly occurs, it is possible to utilize a plurality of images imaged under various imaging conditions, and , to acquire an image with reduced image blurring. Therefore, it is possible to acquire the image with low noise under any illuminance condition. Specifically, by synthesizing the first image, which includes reduced image blurring and low noise, and the second image, which includes many noises and few image blurring, it is possible to acquire an image, which includes low noise and reduced image blurring. Moreover, in the synthesizing, both first and second images are images of adequate exposure, so that the synthesizing process can be simplified, thereby reducing processing time for acquiring a target image. Furthermore, the gain amplification is carried out by AGC before gamma correction by the gamma correction means of the imaging unit in order to acquire the adequate exposure, so that linear characteristics of the image information of the first and second image are maintained, thereby synthesizing a natural image.

#### <<Second embodiment>>

<Concept of Second Embodiment>

In an imaging apparatus of the second embodiment, when synthesizing an image with no image blurring by utilizing a plurality of images imaged under various imaging conditions, image quality does not change so much depending on small changes in brightness around a specific illuminance, which is a boundary of occurrence of image blurring, and it is possible to acquire an image corrected by image blurring correction with low noise.

<Configuration of Second Embodiment>

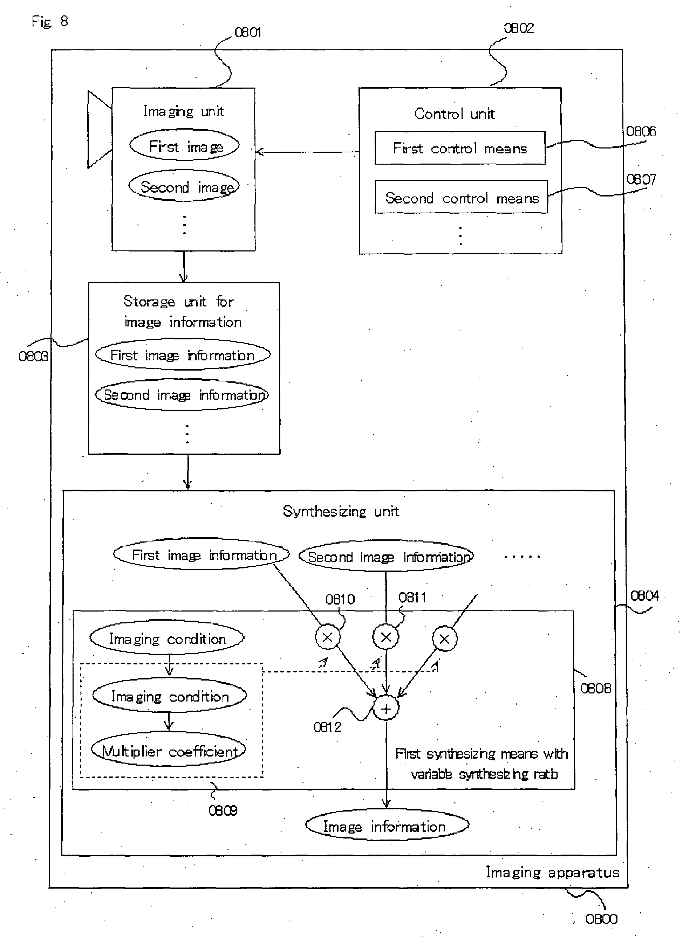

Fig. 8 is a functional block diagram of an imaging apparatus of a second embodiment. The imaging apparatus of the second embodiment comprises a 'first synthesizing means with variable synthesizing ratio' (0808) in addition to the configuration of the imaging apparatus in Fig. 1 and 2 of the first embodiment. Fig. 8 shows a configuration, in which the 'first synthesizing means with variable synthesizing ratio' (0808) is added to the configuration of the imaging apparatus in Fig. 2.

The imaging apparatus (0800) comprises an 'imaging unit' (0801), a 'control unit' (0802), a 'storage unit for image information' (0803), and a 'synthesizing unit' (0804), and the control unit (0802) may comprise a 'first control means' (0806), and a 'second control means' (0807). In addition, the synthesizing unit comprises the 'first synthesizing means with variable synthesizing ratio' (0808). As to the components same as those in Fig. 1 and 2 of the first embodiment, descriptions are omitted.

The 'first synthesizing means with variable synthesizing ratio' (0808) has a function of determining a synthesizing ratio, which is variable according to any one or more imaging conditions of the plurality of images. Specifically, for example, conversion (0809) of the imaging condition to multiplier coefficient is carried out, and acquired respective multiplier coefficients are inputted, multiplication of the image information is carried out by the respective multiplier coefficients in multiplier devices (0810 and 0811), and after that, in an adder (0812), the multiplied respective image information are added, thereby synthesizing an image. Note that, upon multiplication of the multiplier coefficient, the multiplier coefficient may be determined with respect to each pixel, thereby carrying out the multiplication.

(Concrete example of control under illuminance condition, in which image blurring possibly occurs)

In the second embodiment, the control under illuminance condition, in which image blurring hardly occurs, is the same as that of the first embodiment, so that only concrete examples of the control under illuminance condition, in which image blurring possibly occurs, will be described with reference to Fig. 8. The descriptions of components, whose controls are the same as those of Fig 1 and 2 in the first embodiment, are omitted.

In the synthesizing unit, for example, when the conversion (0809) of the imaging condition to multiplier coefficient is carried out, according to the exposure and gain of the imaging condition 1 regarding the first image or the imaging condition 2 regarding the second image, the multiplier coefficient 1 (not indicated) to be multiplied by the image information 1 regarding the first image, and the multiplier coefficient 2 (not indicated) to be multiplied by the image information 2 regarding the second image are varied, and the multiplied respective image information are added together in the adder (0812), thereby synthesizing.

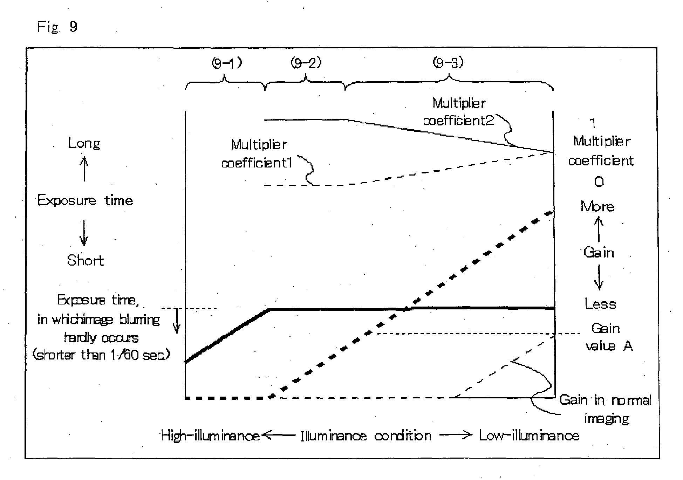

With reference to Figs. 3 and 9, the outline in cases where synthesizing is carried out by means of the first image and the second images in the synthesizing unit is described. Fig. 9 shows a state, in which the 'second control means' (0807) in the control unit (0802) carries out the control according to the brightness, so that the second image, one image other than the plurality of images to be imaged, is imaged in the exposure time, in which no image blurring occurs, and with adequate exposure by amplifying gain. In addition, Fig. 9 shows the control of conversion to the multiplier coefficient based on the acquired imaging condition.

At the outset, under the middle-illuminance condition (Fig. 3, 3-2), which is slightly darker than the high-illuminance condition (Fig. 3, 3-1), the exposure time is controlled to be longer than 1/60 sec. in the first control means (0806), and the control corresponds to the 'control under the brightness, in which the image blurring possibly occurs' as described in the first embodiment. The control by the first control means (0806) is the same as that of the first embodiment, so that the control by the second control means (0807) will be described.

In the second control means, for example, the exposure time, in which no image blurring occurs, therefore, the exposure time 1/60 sec. is maintained, thereby controlling the exposure time for suppressing the image blurring (Fig. 9, 9-2). In addition, the second control means (0807) amplifies gain to compensate for underexposure due to the maintenance of the exposure time 1/60 sec, thereby acquiring adequate exposure. In addition, if the imaging condition shifts to the low-illuminance condition, further amplification of the gain is carried out in order to acquire adequate exposure. At a specific gain value, degradation of image quality due to increasing noise by the amplification of gain is recognized (Fig. 9, gain value A).

When converting (0809) the imaging condition to the multiplier coefficient, for example, as shown in the upper portion of Fig. 9, from the state, in which the exposure time is controlled to longer than 1/60 sec., to the state, in which the gain value is controlled to be a value, at which the degradation of image quality due to increasing noise caused by the gain amplification is recognized (in the exposure control state under middle-illuminance as shown in Fig. 9: 9-2), the multiplier coefficient 1 (for the first image) of the multiplier 1 (0810) is set to 0, and the multiplier coefficient 2 (for the second image) of the multiplier 2 (0811) is set to 1.

In the 'first synthesizing means with variable synthesizing ratio' (0808) of the synthesizing unit, the multiplication for the image information is carried out in the multiplier 1 (0810) and the multiplier 2 (0811) based on the multiplier coefficient acquired by the conversion (0809) of the imaging condition to the multiplier coefficient, thereby synthesizing an image in the adder (0812).

Thus, in the synthesizing unit (0808), synthesizing process by utilizing only information included in the image information 2, so that the control to acquire an image, which mainly has a property of the image information 2 as 'image with little image blurring and without degradation of image quality due to noise', is carried out.

Subsequently, under the low-illuminance condition darker than the above illuminance condition, the second control means (0807) continuously maintains the 'exposure time, in which no image blurring occurs', therefore, the exposure time 1/60 sec., thereby controlling the exposure time in order to suppress the image blurring (9-3). Hereat, the second control means (0807) further amplifies gain more than that in the control state of gain (9-4), in which the degradation of image quality due to increasing noise caused by the gain amplification is recognized, in order to compensate for underexposure due to the maintenance of the exposure time 1/60 sec, thereby acquiring adequate exposure.

When converting (0809) the imaging condition to the multiplier coefficient, for example, as shown in the upper portion of Fig. 9, from the state, in which the gain value is controlled to be a value, at which the degradation of image quality due to increasing noise caused by the gain amplification is recognized, to the state, in which the exposure control is maximum (in the exposure control state under middle-illuminance as shown in Fig. 9: 9-3), the multiplier coefficient 1 (for the first image) of the multiplier 1 (0810) is varied from 0 to 0.5, and the multiplier coefficient 2 (for the second image) of the multiplier 2 (0811) is varied from 1 to 0.5 in increments.

In the first synthesizing means with variable synthesizing ratio of the synthesizing unit, the multiplication for the image information is carried out in the multiplier 1 (0810) and the multiplier 2 (0811) based on the multiplier coefficient acquired by the conversion (0809) of the imaging condition to the multiplier coefficient, thereby synthesizing an image in the adder (0812).

Therefore, in the synthesizing unit, as the illuminance decreases, more information from the image information 1 than information from the image information 2 is mainly used for the synthesizing, so that usage ratio of the image information 2 having the property as 'image, in which little image blurring is included, but degradation of image quality due to noise is recognized, and the degradation of image quality becomes worse due to noise increasing by the gain amplification' is lowered, and control is carried out in order to acquire mainly an image having the property of the image information 1 as 'image, which has suppressed image blurring, small size, and low noise'.

Note that in this embodiment, in the multiplier 1 (0810) and the multiplier 2 (0811) of the first synthesizing means with variable synthesizing ratio (0808), from the state, in which the gain value is controlled to be a value, at which the degradation of image quality due to increasing noise caused by the gain amplification is recognized, to the state, in which the exposure control is maximum (in the exposure control state under middle-illuminance as shown in Fig. 9: 9-3), the multiplier coefficient 1 (for the first image) of the multiplier 1 (0810) is varied from 0 to 0.5, and the multiplier coefficient 2 (for the second image) of the multiplier 2 (0811) is varied from 1 to 0.5 in increments, however, if the image information 2 includes many noise components, the multiplier coefficient 1 (for the first image) of the multiplier 1 (0810) may be varied from 0 to 1, and the multiplier coefficient 2 (for the second image) of the multiplier 2 (0811) may be varied from 1 to 0 in increments. The degree of the variation of the multiplier coefficient is to be appropriately set depending on the state of the image information 1 and 2, and the control may be carried out by other values than the above values.

Moreover, in this embodiment, the multiplier coefficient 1 of the multiplier 1 (0810) and the multiplier coefficient 2 of the multiplier 2 (0811) have been described separately. However, the multiplier coefficient 2 of the multiplier 2 (0811) may be defined as a value acquired by subtracting the multiplier coefficient 1 of the multiplier 1 (0810) from 1.

\<Processing Flow of Second Embodiment\>

The processing flow of the second embodiment is the same as that of the imaging apparatus of Fig. 6 in the first embodiment. Note that in the synthesizing of the first and second images in the synthesizing step (S0610), as described above, the synthesizing ratio between the plurality of images is variable depending on imaging conditions.

<Brief Description of Effects of Second Embodiment>

In cases where the correction of image blurring is carried out by synthesizing image information of an image by partially utilizing the image information of a plurality of images when the condition is a low-illuminance condition causing image blurring, synthesizing ratios between plurality of images are variable according to the imaging conditions, so that it is possible to stop causing unnaturalness, in which if the brightness is higher than the specific illuminance condition causing the image blurring, a high-quality image having many high-frequency components is generated, and if the illuminance is lower than the specific illuminance condition, a low-quality image having few high-frequency components is generated, and small change of brightness causes large change of image quality, thereby acquiring an image, which appears natural.

**<<Third embodiment>>**

<Concept of Third Embodiment>

In an imaging apparatus of a third embodiment, in cases where the synthesizing of the second image in a state that gain is amplified is carried out in order to compensate underexposure due to short exposure time under a certain level of low-illuminance condition, for the dark portion of the object with insufficient light, it is possible to acquire high-quality image with suppressed noise by increasing ratio of the image including less noise.

<Configuration of Third Embodiment>

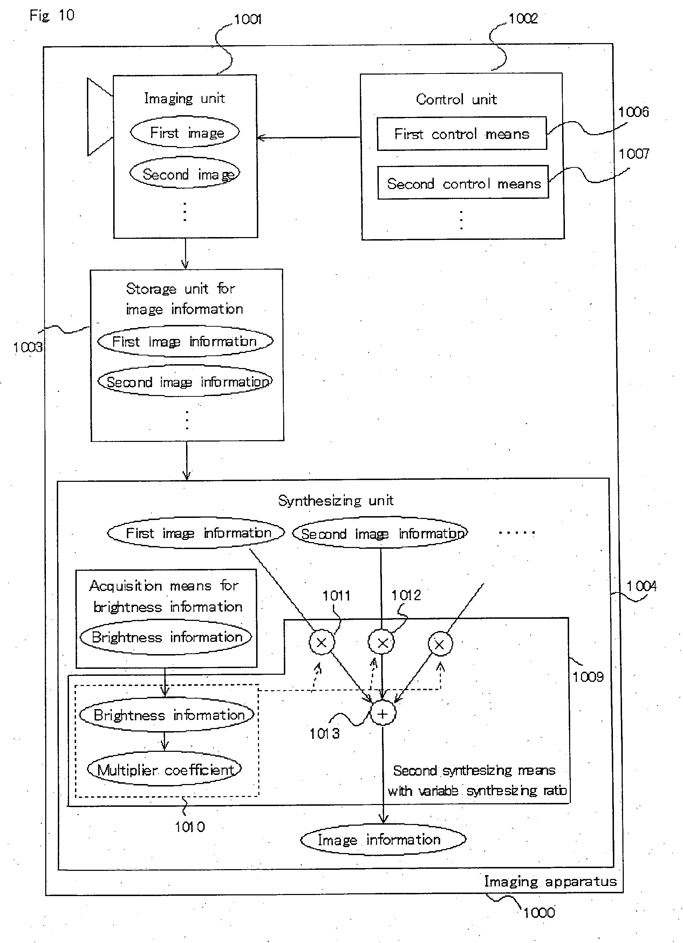

Fig. 10 is a functional block diagram of an imaging apparatus of the third embodiment. The imaging apparatus of the third embodiment comprises an 'acquisition unit for brightness information' (1008), and a 'second synthesizing means with variable synthesizing ratio' (1009) in addition to the configuration of the imaging apparatus of the first and second embodiments. Fig. 10 shows a configuration, in which the 'acquisition unit for brightness information' (1008) and the 'second synthesizing means with variable synthesizing ratio' (1009) are added to the configuration of the imaging apparatus of Fig. 2 in the first embodiment. The imaging apparatus (1000) comprises an 'imaging unit' (1001), a 'control unit' (1002), a 'storage unit for image information' (1003), and a 'synthesizing unit' (1004), and the control unit (1002) may comprise a 'first control means' (1006), and a 'second control means' (1007). In addition, the synthesizing unit (1004) comprises the 'acquisition unit for brightness information' (1008) and the 'second synthesizing means with variable synthesizing ratio' (1009). As to the components that are the same as those in the first and second embodiments, descriptions have been omitted.

The 'acquisition unit for brightness information' (1008) has a function of acquiring brightness information from the one or plurality of images stored in the storage unit for image information (1003). For example, the first brightness information of the first image is acquired. The 'brightness information' may be brightness information in all pixels configuring the image, or may be the brightness information of pixels of one portion. In addition, the brightness information is expressed by each value of RGB such as the formula 2, so that not the value of Y but the combination of values of RGB may be the brightness information.

In addition, in the imaging apparatus, it is assumed that the brightness it is possible to determine that, for example, the information acquired by the acquisition unit for brightness information (1008) indicates high-brightness, middle-brightness, or low-brightness.

The 'second synthesizing means with variable synthesizing ratio' (1009) has a function of determining a synthesizing ratio according to the brightness information. Specifically, for example, each multiplier coefficient, acquired by the conversion (1010) of the brightness information to a multiplier coefficient, is inputted, the image information is multiplied by each multiplier coefficient in the multiplier (1011 and 1012), and addition is carried out in the adder (1013), thereby carrying out synthesizing.

(Concrete example of control under illuminance condition, in which image blurring possibly occurs)

In the third embodiment, the control under illuminance condition, in which image blurring hardly occurs, is the same as that of the first embodiment, so that only a concrete example of the gain control under illuminance condition, in which image blurring possibly occurs, and degradation of image quality due to noise is recognized, will be described with reference to Fig. 10. The descriptions of components, whose controls are the same as those of Fig 1 and 2 in the first embodiment, have been omitted.

The synthesizing unit, for example, acquires the first brightness information of the first image simultaneously to the synthesizing, the conversion (1010) of the brightness information to a multiplier coefficient is carried out, the multiplier coefficient is outputted to the second synthesizing means with variable synthesizing ratio (1009), and the second synthesizing means with variable synthesizing ratio (1009) carries out multiplication of the image information to the respective multiplier coefficients, and addition is carried out in the adder (1013).

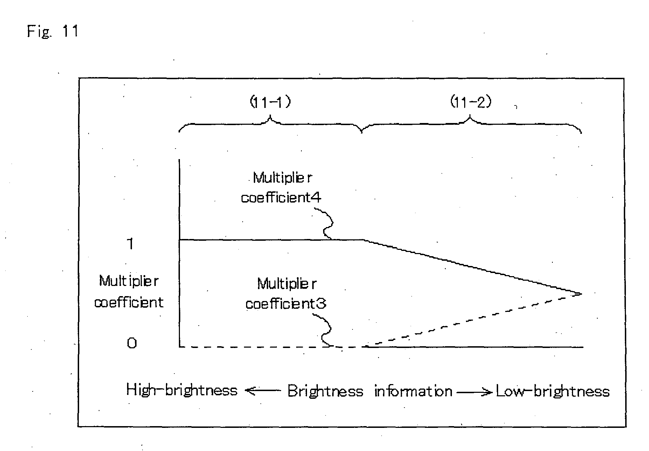

With reference to Fig. 11, the outline in cases where synthesizing is carried out by means of the first image and the second images in the synthesizing unit are described. Fig. 11 shows the control, in which conversion to multiplier coefficient bases on the brightness information in the respective pixels acquired from the first or second image.

At the outset, in the synthesizing of pixels, in which the brightness information indicates high to middle brightness, for example, as shown in Fig. 11, the multiplier coefficient 3 (for the first image, and not indicated in Fig. 10) of the multiplier 1 (1011) is set to 0, and the multiplier coefficient 4 (for the second image, and not indicated in Fig. 10) of the multiplier 2 (1012) is set to 1. In the second synthesizing means with variable synthesizing ratio (1009) of the synthesizing unit (1004), the multiplication for the image information is carried out in the multiplier 1 (1011) and the multiplier 2 (1012) based on the multiplier coefficient acquired from the brightness information, thereby synthesizing an image in the adder (1013). Therefore, in the synthesizing unit (1004), only image information 2 is mainly used for the synthesizing (only image information 2 is used for the generation of an image), so that the synthesizing control, mainly having the property of the image information 2 as 'image, in which degradation of image quality due to noise is recognized, but signal level in the high-brightness portion is high and noise is not visible', is carried out (11-1).

Subsequently, in the synthesizing of pixels, in which the brightness information indicate middle to low brightness, for example, as shown in Fig. 11, the multiplier coefficient 3 (for the first image) of the multiplier 1 (1011) is varied from 0 to 0.5, and the multiplier coefficient 4 (for the second image) of the multiplier 2 (1012) is varied from 1 to 0.5 in increments. In the second synthesizing means with variable synthesizing ratio (1009) of the synthesizing unit (1004), the multiplication for the image information is carried out in the multiplier 1 (1011) and the multiplier 2 (1012) based on the multiplier coefficient acquired from the brightness information, thereby synthesizing an image in the adder (1013). Therefore, in the synthesizing unit (1004), the synthesizing process according to the brightness information is carried out. As the brightness information indicates low-brightness, the pixels, having the property of the image information 2 as 'pixels, in which degradation of image quality due to noise is recognized, but the signal level in the low-brightness portion is low and noise is more visible', are less used, and synthesizing control, mainly having the property of the image information 1 as 'pixels, which have suppressed image blurring and low noise but less high-frequency components due to its small size', is carried out (11-2).

Note that in this embodiment, when acquisition (1010) of the multiplier coefficient from the brightness information, in the synthesizing of pixels, in which the brightness information indicates middle-brightness to low-brightness, the multiplier coefficient 3 of the multiplier 1 (1011) is varied from 0 to 0.5, and the multiplier coefficient 4 of the multiplier 2 (1012) is varied from 1 to 0.5 in increments, however, if the image information 2 includes many noise components, the multiplier coefficient 3 of the multiplier 1 (1011) may be varied from 0 to 1, and the multiplier coefficient 4 of the multiplier 2 (1012) may be varied from 1 to 0 in increments. The degree of the variation of the multiplier coefficient is to be appropriately set depending on the state of the image information 1 and 2, and the control may be carried out by values other than the above values.

Moreover, in this embodiment, the multiplier coefficient 3 of the multiplier 1 (1011) and the multiplier coefficient 4 of the multiplier 2 (1012) have been described separately. However, the multiplier coefficient 4 of the multiplier 2 (1012) may be defined as a value acquired by subtracting the multiplier coefficient 3 of the multiplier 1 (1011) from 1.

Furthermore, for example, in cases where the third embodiment and the first synthesizing means with variable synthesizing ratio of the second embodiment are used in combination, for the multiplier coefficient 2 of the multiplier 2 (0810) in the second embodiment, the square root of the value acquired by multiplying the multiplier coefficient 4 of the multiplier 2 (1012) of the third embodiment is set to the multiplier coefficient' used by the multiplier 2 (1012), and the multiplier coefficient used in the multiplier 1 (1011) may be defined as a value acquired by subtracting the multiplier coefficient' used in the multiplier 2 (1012) from 1.

<Processing Flow of Third Embodiment>

The processing flow of the third embodiment is the same as that of the imaging apparatus of Fig. 6 in the first embodiment. Note that in the synthesizing of the first and second images in the synthesizing step (S0610), as described above, the synthesizing ratio between the plurality of images is variable depending on the brightness information.

<Brief Description of Effects of Third Embodiment>

In an imaging apparatus of a third embodiment is an imaging apparatus, In another aspect of the present invention, in cases where the synthesizing of the second image in a state in which gain is amplified is carried out in order to compensate for underexposure due to a short exposure time under a certain level of low-illuminance condition, for the dark portion of the object with insufficient light, it is possible to acquire a high-quality image with suppressed noise by increasing the ratio of the image including less noise.

**<<Fourth embodiment>>**

<Concept of Fourth Embodiment>

In an imaging apparatus of a fourth embodiment, in cases where the synthesizing of the second image in a state in which gain is amplified is carried out in order to compensate for underexposure due to a short exposure time under a certain level of low-illuminance condition, it is possible to acquire high-quality image with suppressed noise by increasing a ratio of the first image including less noise used for the synthesizing according to a rise in temperature of an imaging unit, even if the temperature rises in the imaging unit. Therefore, the noise is caused by the gain amplification, and there is a possibility that the noise cannot be suppressed depending on the rise in temperature of the imaging unit.

<Configuration of Fourth Embodiment>

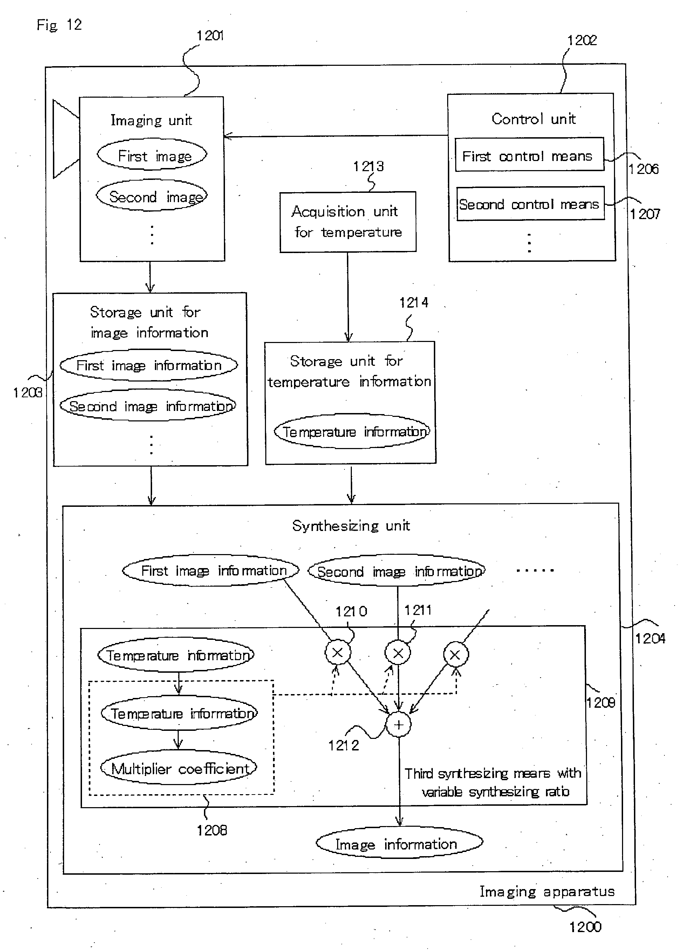

Fig. 12 is a functional block diagram of an imaging apparatus of the fourth embodiment. The imaging apparatus of the fourth embodiment comprises an 'acquisition unit for temperature information' (1213), a 'storage unit for temperature information' (1214), and a 'third synthesizing means with variable synthesizing ratio' (1209) in addition to the configuration of the imaging apparatus of any one of the first to third embodiments. Fig. 12 shows a configuration, in which the 'acquisition unit for temperature information' (1213), the 'storage unit for temperature information' (1214), and the 'third synthesizing means with variable synthesizing ratio' (1209) are added to the configuration of the imaging apparatus of Fig. 2 in the first embodiment. The imaging apparatus (1200) comprises an 'imaging unit' (1201), a 'control unit' (1202), a 'storage unit for image information' (1203), and a 'synthesizing unit' (1204), and the control unit (1202) may comprise a 'first control means' (1206), and a 'second control means' (1207). In addition, the synthesizing unit (1204) comprises the 'third synthesizing means with variable synthesizing ratio' (1209). As to the components that are the same as those in any one of the first to third embodiments, descriptions have been omitted.

The 'acquisition unit for temperature information' (1213) has a function of measuring a temperature of the imaging unit (1201). As a method for measuring the temperature in the imaging unit, for example, a method, in which a temperature sensor adjacent to the imaging unit measures the temperature, is cited. In addition, the type of the temperature sensor is not limited. Moreover, the 'storage unit for temperature information' (1214) has a function of storing the temperature information acquired by the acquisition unit for temperature (1213).

The 'third synthesizing means with variable synthesizing ratio' (1209) has a function of determining a synthesizing ratio, which is variable, according to the temperature information.

Specifically, for example, according to the temperature information acquired from the storage unit for temperature information (1214), the multiplication of the image information is carried out with respect to each plurality of images in the multipliers (1210 and 1211), and addition of the multiplied respective image information is carried out in the adder (1212), thereby synthesizing an image.

(Concrete example of control under illuminance condition, in which image blurring possibly occurs)

In the fourth embodiment, the control under illuminance condition, in which image blurring hardly occurs, is the same as that of the first embodiment, so that only a concrete example of the control under illuminance condition, in which image blurring possibly occurs, will be described with reference to Fig. 12. The descriptions of components, whose controls are the same as those of Figs 1 and 2 in the first embodiment, have been omitted.

In the synthesizing unit, for example, according to the temperature information acquired from the storage unit for temperature information (1214), the multiplier coefficient 5 (not indicated) to be multiplied by the image information 1 regarding the first image, and the multiplier coefficient 6 (not indicated) to be multiplied by the image information 2 regarding the second image are varied, and the multiplied respective image information are added together in the adder (1212), thereby synthesizing.

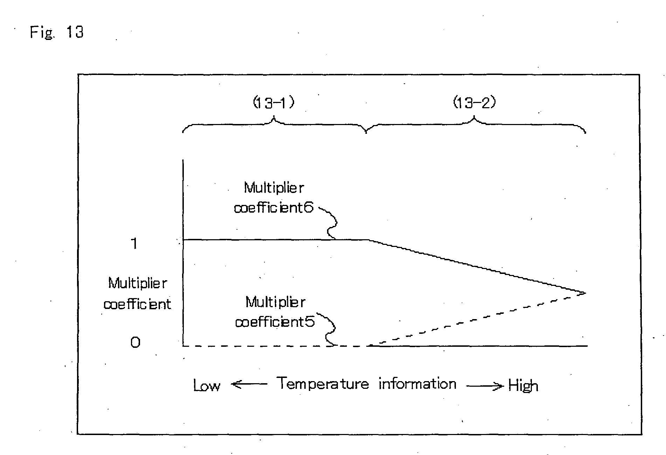

With reference to Fig. 13, the outline in cases where synthesizing is carried out by means of the first image and the second images in the synthesizing unit is described. Fig. 13 shows the control of conversion to the multiplier coefficient based on the acquired temperature information acquired from the storage unit for temperature information (1214), which stores the temperature information acquired by the acquisition unit for temperature (1213).

At the outset, in cases where the temperature of the imaging unit (1201) indicated by the temperature information is a low-temperature (about 25 degrees Celsius) to a middle-temperature (about 25 to 35 degrees Celsius), for example, as shown in Fig. 13, the multiplier coefficient 5 (for the first image) of the multiplier 1 (1210) is set to 0, and the multiplier coefficient 6 (for the second image) of the multiplier 2 (1211) is set to 1. In the third synthesizing means with variable synthesizing ratio (1209) of the synthesizing unit (1204), the multiplication for the image ' information is carried out in the multiplier 1 (1210) and the multiplier 2 (1211) based on the multiplier coefficient acquired from the temperature information, thereby synthesizing an image in the adder (1212). Therefore, in the synthesizing unit (1204), the synthesizing process by utilizing only the image information 2 is carried out, so that the synthesizing control, mainly having the property of the image information 2 as 'image, in which image blurring hardly occurs, and quantum noise increases due to gain amplification but thermal noise is small, so that total noise is suppressed', is carried out (13-1).

Generally, optical noise n is expressed by n = quantum noise (P, M) + thermal noise + system noise. Although the quantum noise increases due to input optical noise P and magnification rate M of a sensor, the thermal noise does not depend on this. Therefore, in cases where a sensor with a high magnification rate is used under high-illuminance condition, thermal noise can be ignored.

However, under the high-illuminance condition, the thermal noise is also amplified by the gain amplification, thereby increasing noise. Additionally, in cases where the imaging unit has high temperature, the thermal noise is increased, so that the thermal noise is further amplified by the gain amplification.

Subsequently, in cases where the temperature of the imaging unit (1201) indicated by the temperature information is a middle-temperature (about 25 to 35 degrees Celsius) to high-temperature (higher than 35 degrees Celsius), for example, as shown in Fig. 13, the multiplier coefficient 5 (for the first image) of the multiplier 1 (1210) is varied from 0 to 0.5, and the multiplier coefficient 6 (for the second image) of the multiplier 2 (1211) is varied from 1 to 0.5 in increments. In the third synthesizing means with variable synthesizing ratio (1209) of the synthesizing unit (1204), the multiplication for the image information is carried out in the multiplier 1 (1210) and the multiplier 2 (1211) based on the multiplier coefficient acquired from the temperature information, thereby synthesizing an image in the adder (1212). Therefore, in the synthesizing unit (1204), the synthesizing process according to the temperature information is carried out. As the temperature information indicates high-temperature, the image having the property of the image information 2 at high-temperature as 'image, in which image blurring hardly occurs, and quantum noise and thermal noise increased by high-temperature increase due to gain amplification, so that total noise increases' is less used, and synthesizing control to mainly use pixels, having the property of the image information 1 as 'pixels, which have suppressed image blurring and low noise due to averaging and pixel addition, but less high-frequency components due to its small size', is carried out (13-2).

Note that in this embodiment, when acquisition (1208) of the multiplier coefficient from the temperature information, in the synthesizing of images, in which the temperature information indicate middle-temperature to high-temperature, the multiplier coefficient 5 of the multiplier 1 (1210) is varied from 0 to 0.5, and the multiplier coefficient 6 of the multiplier 2 (1211) is varied from 1 to 0.5 in increments, however, if the image information 2 includes many noise components, the multiplier coefficient 5 of the multiplier 1 (1210) may be varied from 0 to 1, and the multiplier coefficient 6 of the multiplier 2 (1211) may be varied from 1 to 0 in increments. The degree of the variation of the multiplier coefficient is to be appropriately set depending on the state of the image information 1 and 2, and the control may be carried out by values other than the above values.

Moreover, in this embodiment, the multiplier coefficient 5 of the multiplier 1 (1210) and the multiplier coefficient 6 of the multiplier 2 (1211) have been described separately. However, the multiplier coefficient 6 of the multiplier 2 (1211) may be defined as a value acquired by subtracting the multiplier coefficient 5 of the multiplier 1 (1210) from 1.

Furthermore, for example, in cases where the fourth embodiment, and the first synthesizing means with variable synthesizing ratio and the second synthesizing means with variable synthesizing ratio of the second embodiment and the third embodiment are used in combination, for the respective multiplier coefficients calculated in the multiplier 2 in the other embodiments, the square root of the value acquired by multiplying the multiplier coefficient 6 of the multiplier 2 - (1212) of the third embodiment is set to the multiplier coefficient' used in the multiplier 2 (1212), and the multiplier coefficient used in the multiplier 1 (1211) may be defined as a value acquired by subtracting the multiplier coefficient' from 1.

<Processing Flow of Fourth Embodiment>

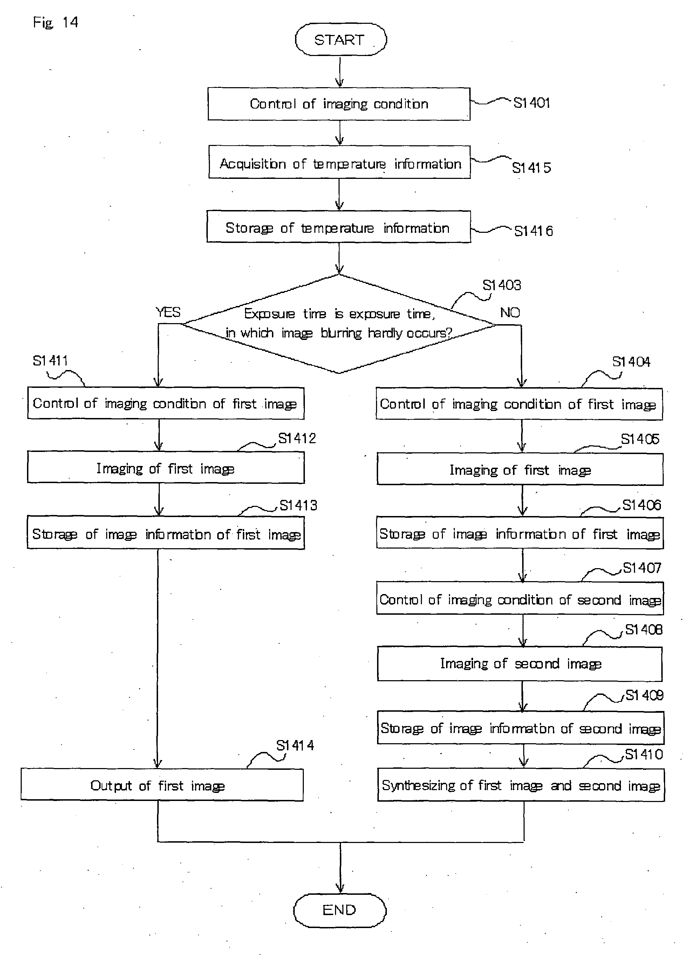

The processing flow of the fourth embodiment is mostly the same as that of the imaging apparatus of Fig. 6 in the first embodiment, and only different processing is described with reference to Fig. 14.

Process up to a step of controlling (S1401) is the same as that of the imaging apparatus of Fig. 6 in the first embodiment. Subsequently, the acquisition unit for temperature acquires the temperature information. This process is carried out by the acquisition unit for temperature (a step of acquiring temperature information S1415). Subsequently, the temperature information acquired by the step of acquiring temperature information S 1415 is stored. This process is carried out by the storage unit for temperature information (a step of storing temperature information S 1416).

Hereafter, process up to a step of storing image information of second image (S1409), which stores the image information of the second image imaged by a step of imaging second image (S1408), is the same as that of the imaging apparatus of Fig. 6 in the first embodiment. In synthesizing of the first and second images in step of synthesizing (S 1410) to be carried out subsequently, as described above, the synthesizing ratio between the plurality of images is variable according to the temperature information.

<Brief Description of Effects of Fourth Embodiment>

In the imaging apparatus of the fourth embodiment, in cases where the synthesizing of the second image in a state that gain is amplified is carried out in order to compensate for underexposure due to a short exposure time under a certain level of low-illuminance condition, it is possible to acquire high-quality image with suppressed noise by increasing ratio of the first image including less noise used for the synthesizing according to a rise in temperature of an imaging unit, even if the temperature rises in the imaging unit.

**<<Fifth embodiment>>**

<Concept of Fifth Embodiment>

In an imaging apparatus of a fifth embodiment, in cases where the synthesizing of the second image in a state in which gain is amplified is carried out in order to compensate for underexposure due to a short exposure time under a certain level of low-illuminance condition, edge information is acquired from an image having less noise, and it is possible to carry out synthesizing, in which a larger ratio of the image having less noise is used for area including no edge information, thereby acquiring high-quality image with suppressed noise in the area including no edge information.

<Configuration of Fifth Embodiment>

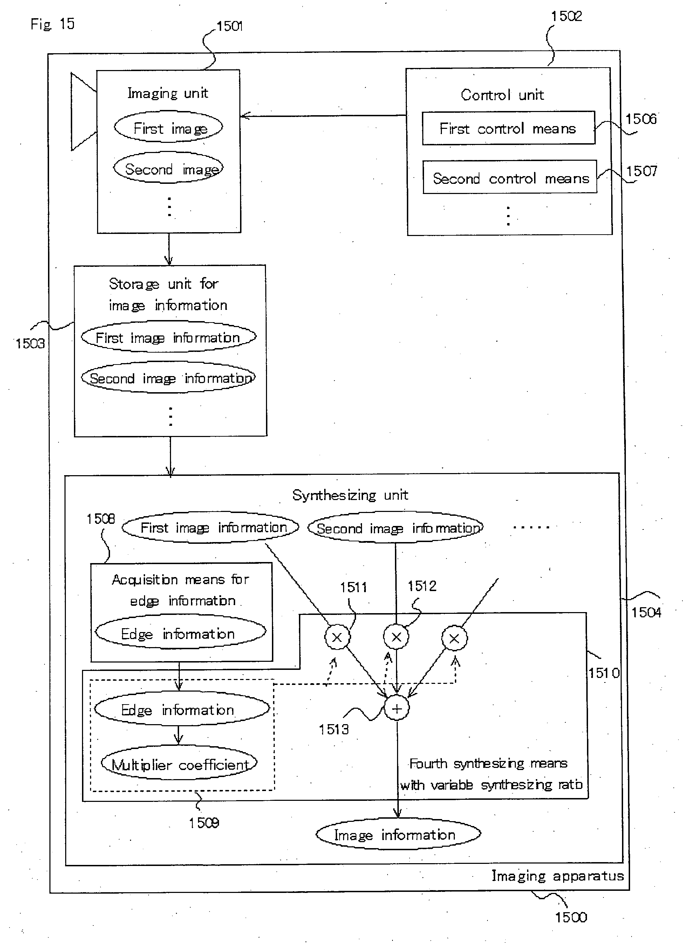

Fig. 15 is a functional block diagram of an imaging apparatus of the fifth embodiment. The imaging apparatus of the fifth embodiment comprises an 'acquisition means for edge information' (1508), and a 'fourth synthesizing means with variable synthesizing ratio' (1510) in addition to the configuration of the imaging apparatus of any one of the first to fourth embodiments. Fig. 15 shows a configuration, in which the 'acquisition means for edge information' (1508), the 'storage unit for edge information' (1214), and the 'fourth synthesizing means with variable synthesizing ratio' (1510) are added to the configuration of the imaging apparatus of Fig. 2 in the first embodiment. The imaging apparatus (1500) comprises an 'imaging unit' (1501), a 'control unit' (1502), a 'storage unit for image information' (1503), and a 'synthesizing unit' (1504), and the control unit (1502) may comprise a 'first control means' (1506), and a 'second control means' (1507). In addition, the synthesizing unit (1504) comprises the 'acquisition means for edge information' (1508) and the 'fourth synthesizing means with variable synthesizing ratio' (1510). As to the components that are the same as those in any one of the first to fourth embodiments, descriptions have been omitted.

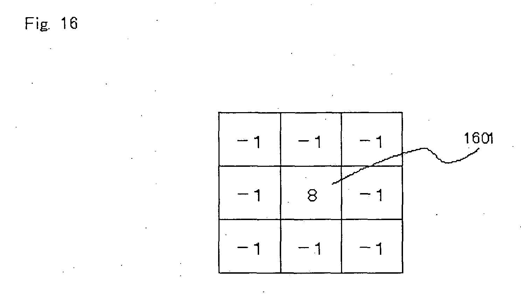

The 'acquisition means for edge information' (1508) has a function of acquiring edge information from the one or plurality of images stored in the storage unit for image information (1503). For example, the edge information is acquired from the image information of the first image. In a representative method for acquiring the edge information, as shown in Fig. 16, a secondary differentiation filter (Laplacian filter) configured by 3 by 3 matrix, in which central numeral is set as a weight of a target pixel (1601), and peripheral numerals are set to weights of peripheral pixels, is used. The absolute value amount after the filtering corresponds to actual edge information.

The 'fourth synthesizing means with variable synthesizing ratio' (1510) has a function of determining a synthesizing ratio, which is variable, according to the edge information. Specifically, for example, the respective multiplier coefficients acquired by conversion (1509) from the edge information to the multiplier coefficient are inputted, the multiplication of the image information for the respective multiplier coefficients are carried out in the multipliers (1511 and 1512), and addition is carried out in the adder (1513), thereby synthesizing an image.

(Concrete example of control under illuminance condition, in which image blurring possibly occurs)

In the fifth embodiment, the control under illuminance condition, in which image blurring hardly occurs, is the same as that of the first embodiment, so that only a concrete example of the control under illuminance condition, in which image blurring possibly occurs, and degradation of image quality due to noise is recognized, will be described with reference to Fig. 15. The descriptions of components, whose controls are the same as those of Figs 1 and 2 in the first embodiment, have been omitted.

The synthesizing unit, for example, acquires the edge information of the first image simultaneously to synthesizing, converts the edge information to the multiplier coefficient, and outputs the multiplier coefficient to the fourth synthesizing means with variable synthesizing ratio (1510). The fourth synthesizing means with variable synthesizing ratio (1510) carries out multiplication of the image information to the respective multiplier coefficients, and the adder (1513) carries out addition.

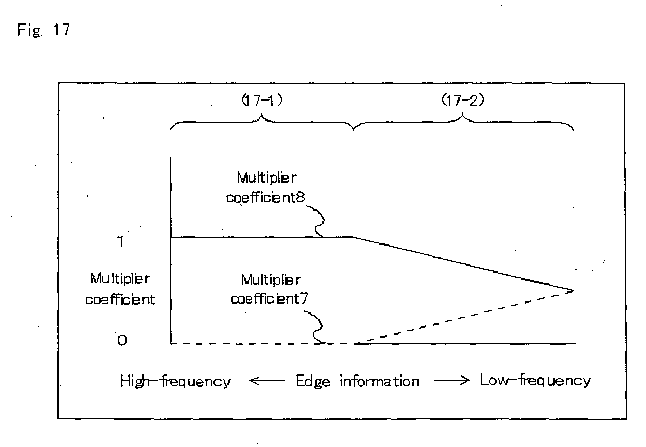

With reference to Fig. 17, the outline in cases where synthesizing is carried out by means of the first image and the second images in the synthesizing unit is described. Fig. 17 shows the control of conversion to the multiplier coefficient based on the edge information acquired from the acquisition means for edge information (1508).

At the outset, in the synthesizing of pixels, in which the edge information indicates high to middle frequency, for example, as shown in Fig. 17 (17-1), the multiplier coefficient 7 (for the first image, and not indicated in Fig. 15) of the multiplier 1 (1511) is set to 0, and the multiplier coefficient 8 (for the second image, and not indicated in Fig. 15) of the multiplier 2 (1512) is set to 1. In the fourth synthesizing means with variable synthesizing ratio (1509) of the synthesizing unit (1504), the multiplication for the image information is carried out in the multiplier 1 (1511) and the multiplier 2 (1512) based on the multiplier coefficient acquired from the edge information, thereby synthesizing an image in the adder (1513). Therefore, in the synthesizing unit (1504), the image information 2, which corresponds to the portion of pixels in the first, image having edge information of high-frequency to middle-frequency, is used for the synthesizing with no change, so that the synthesizing control, having the property of the image information 2 as 'image, in which image blurring hardly occurs, but degradation of image quality due to noise is recognized, and the noises are increased by the gain amplification, thereby causing further degradation of image quality', is mainly carried out in the edge area.

Subsequently, in the synthesizing of pixels, in which the edge information indicates middle to low frequency, for example, as shown in Fig. 17 (17-2), the multiplier coefficient 7 (for the first image) of the multiplier 1 (1511) is varied from 0 to 0.5, and the multiplier coefficient 8 (for the second image) of the multiplier 2 (1512) is varied from 1 to 0.5 in increments. In the fourth synthesizing means with variable synthesizing ratio (1510) of the synthesizing unit (1004), the multiplication for the image information is carried out in the multiplier 1 (1511) and the multiplier 2 (1512) based on the multiplier coefficient acquired from the edge information, thereby synthesizing an image in the adder (1513). Therefore, in the synthesizing unit (1004), the synthesizing process according to the edge information is carried out. As the edge information indicates from middle-frequency to low-frequency, the image information 2 is less used, and the image information 1 is more used, so that synthesizing control mainly having the property of the image information 1 as 'image, which has suppressed image blurring and low noise by averaging and pixel addition, but less high-frequency components due to its small size' is carried out for the non-edge area.

Note that in this embodiment, when acquisition (1509) of the multiplier coefficient from the edge information, in the synthesizing of pixels, in which the edge information indicates middle-frequency to low-frequency, the multiplier coefficient 7 of the multiplier 1 (1511) is varied from 0 to 0.5, and the multiplier coefficient 8 of the multiplier 2 (1512) is varied from-1 to 0.5 in increments, however, if the image information 2 includes many noise components, the multiplier coefficient 7 of the multiplier 1 (1511) may be varied from 0 to 1, and the multiplier coefficient 8 of the multiplier 2 (1512) may be varied from 1 to 0 in increments. The degree of the variation of the multiplier coefficient is to be appropriately set depending on the state of the image information 1 and 2, and the control may be carried out by values other than the above values.

Moreover, in this embodiment, the multiplier coefficient 7 of the multiplier 1 (1511) and the multiplier coefficient 8 of the multiplier 2 (1512) have been described separately. However, the multiplier coefficient 7 of the multiplier 2 (1512) may be defined as a value acquired by subtracting the multiplier coefficient 1 of the multiplier 1 (1511) from 1.

Furthermore, for example, in cases where the fifth embodiment and the first synthesizing means with variable synthesizing ratio of the second embodiment etc. are used in combination, for the respective multiplier coefficients of the multiplier 2 in the other embodiments, the square root of the value acquired by multiplying the multiplier coefficient 8 of the multiplier 2 (1512) of the fifth embodiment is set to the multiplier coefficient' used by the multiplier 2 (1512), and the multiplier coefficient used in the multiplier 1 (1511) may be defined as a value acquired by subtracting the multiplier coefficient' from 1.

<Processing Flow of Fifth Embodiment>

The processing flow of the fifth embodiment is the same as that of the imaging apparatus of Fig. 6 in the first embodiment. Note that in the synthesizing of the first and second images in the synthesizing step (S0610), as described above, the synthesizing ratio between the plurality of images is variable depending on the edge information.

<Brief Description of Effects of Fifth Embodiment>

In the fifth embodiment, in cases where the synthesizing of the second image in a state in which gain is amplified is carried out in order to compensate for underexposure due to a short exposure time under a certain level of low-illuminance condition, if the edge information indicates high-frequency, the synthesizing process, mainly having the property of image information 2 as 'image, in which image blurring hardly occurs, but degradation of image quality due to noise is recognized, and the noises are increased by the gain amplification, thereby causing further degradation of image quality', is carried out, and if the edge information indicates low-frequency, the synthesizing process having the property of image information 1 as 'image, which have suppressed image blurring and low noise by averaging and pixel addition, but less high-frequency components due to its small size' is carried out, thereby acquiring a high-quality image with suppressed noise in the non-edge area.

**<<Sixth embodiment>>**

<Concept of Sixth Embodiment>

In an imaging apparatus of a sixth embodiment, in cases where the synthesizing of the second image in a state in which gain is amplified is carried out in order to compensate for underexposure due to a short exposure time under a certain level of low-illuminance condition, it is possible to acquire moving area information from a plurality of images, and to carry out synthesizing, in which an image having less noise is used for the moving area, thereby acquiring a high-quality image with suppressed noise in the moving area.

<Configuration of Sixth Embodiment>

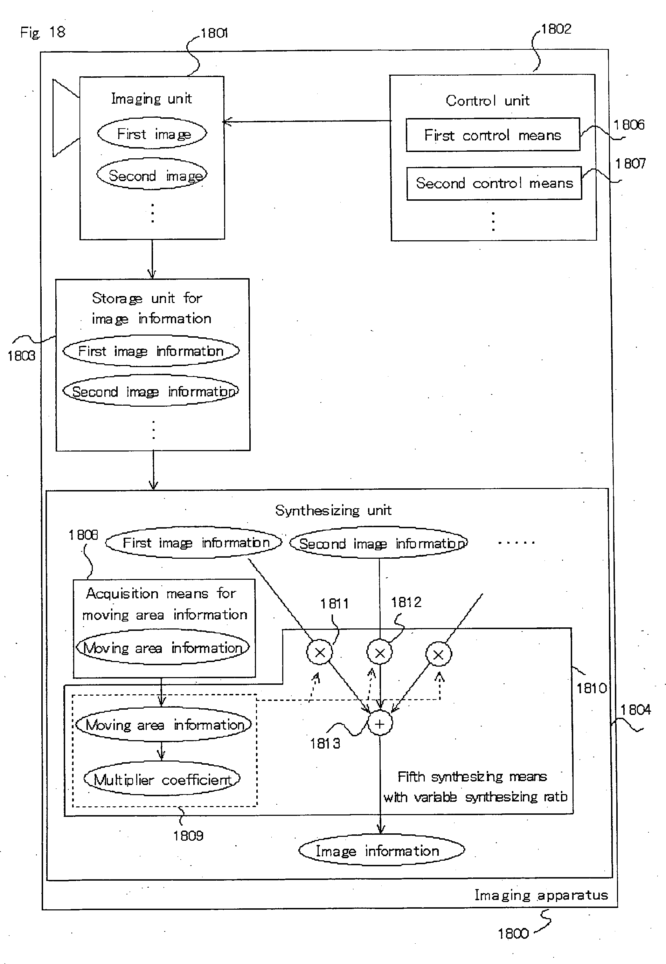

Fig. 18 is a functional block diagram of an imaging apparatus of the sixth embodiment. The imaging apparatus of the sixth embodiment comprises an 'acquisition means for moving area information' (1808), and a 'fifth synthesizing means with variable synthesizing ratio' (1810) in addition to the configuration of the imaging apparatus in Fig. 2 of the first embodiment. Fig. 18 8 shows a configuration, in which the 'acquisition means for moving area information' (1808), and the 'fifth synthesizing means with variable synthesizing ratio' (1810) are added to the configuration of the imaging apparatus in Fig. 2. The imaging apparatus (1800) comprises an 'imaging unit' (1801), a 'control unit' (1802), a 'storage unit for image information' (1803), and a 'synthesizing unit' (1804), and the control unit (1802) may comprise a 'first control means' (1806), and a 'second control means' (1807). In addition, the synthesizing unit (1804) comprises the 'acquisition means for moving area information' (1808), and the 'fifth synthesizing means with variable synthesizing ratio' (1810). As to the components that are the same as those in Fig. 2 of the first embodiment, descriptions have been omitted.

The 'acquisition means for moving area information' (1808) has a function of acquiring moving area information from the plurality of images stored in the storage unit for image information (1803). For example, the acquisition means for moving area information acquires the moving area information from the image information 1 of the first image and the image information 2 of the second image.

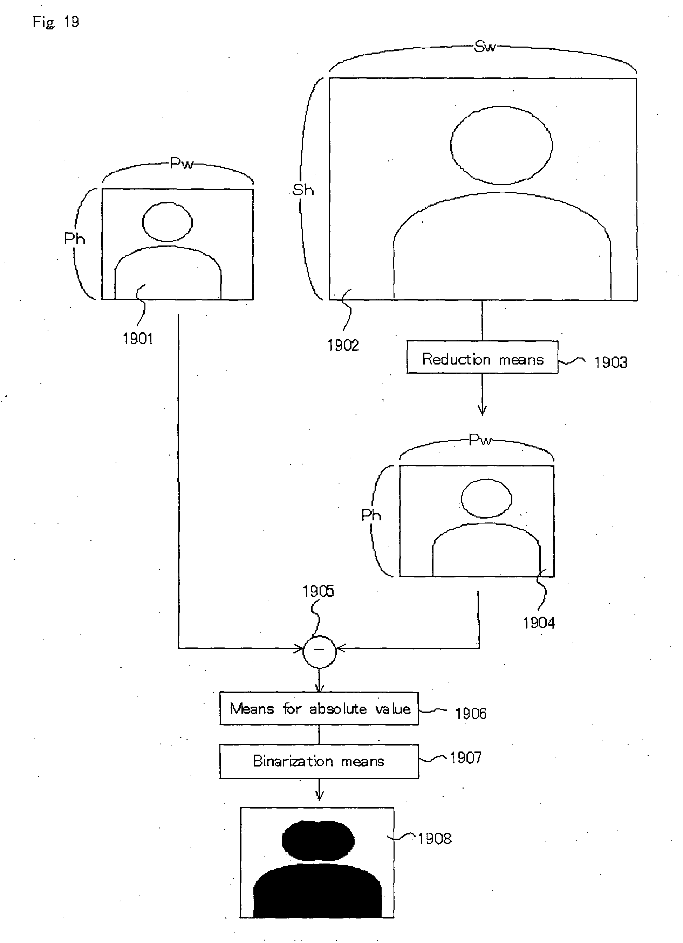

With reference to Fig. 19, the outline of a method, in which the moving area information is acquired by means of the first image and the second images, is described. Fig. 19 shows a case where the first image (1901) and the second image (1902) have different sizes. Moreover, although there is positional difference between the first and second images, the concrete example is described in the Description of the Related Art, so that the descriptions thereof are omitted.

It is assumed that the height of the first image (1901) is Ph, and the width is Pw, and the height of the second image (1902) is Sh, and the width is Sw. Here, assuming that a is a reduction ratio in a horizontal direction of the first image based on the second image and $\beta$ is a reduction ratio in a vertical direction, $\alpha = Sw/Pw$ and $\beta = Sh/Ph$.

At the outset, the acquisition means for moving area information carries out reduction of the image by reduction means (1903), in which the reduction ratio in a horizontal direction is $\alpha$, and the reduction ratio in a vertical direction is $\beta$ based on the second image (1902), thereby generating the reduced second image (1903). Here at, the second image (1902) has a property as 'image, in which image blurring hardly occurs, but degradation of image quality due to noise is recognized, and the noises are increased by the gain amplification, thereby causing further degradation of image quality'. Therefore, it is preferable that LPF (Low Pass Filter) processing is carried out until the image has the same frequency property as that of the first image (1901) acquired by averaging and pixel addition, and the reduction processing (thin processing) is carried out for the image, which has a frequency property close to the frequency property of the first image (1901), thereby generating the reduced second image (1903).

Subsequently, the acquisition means for moving area information carries out subtraction for the image information of the reduced second image (1904) and the first image (1901) in the subtracter (1905). Subsequently, the image information processed by the subtraction is converted to absolute value in the means for absolute value (1906). The image information converted to absolute value is binaried in the binarization means (1907), thereby acquiring the moving area information (1908). The 'binarization means' (1907) has a specific threshold, and if the image information converted to absolute value is more than the threshold, it is determined as the moving area, thereby generating information of 1 (black area in the moving area information 1908). If the image information converted to absolute value is less than the threshold, it is determined as the non-moving area, thereby generating information of 0 (white area in the moving area information 1908). Note that the moving area information generated in the 'acquisition means for moving area information' (1808) is converted to the multiplier coefficient.

The 'fifth synthesizing means with variable synthesizing ratio' (1810) has a function of controlling so that the first image is utilized in a moving area of the second image, which has been determined as a moving area based on the moving area information, and the second image is utilized in a non-moving area of the second image, which has been determined as a region excluding the moving area based on the moving area information. For example, the acquired respective multiplier coefficients are inputted, the multiplication of the image information for the respective multiplier coefficients are carried out in the multiplier 1 (1811) and the multiplier 2 (1812), and addition is carried out in the adder (1813), thereby synthesizing an image.

(Concrete example of control under illuminance condition, in which image blurring possibly occurs)

In the fifth embodiment, the control under illuminance condition, in which image blurring hardly occurs, is the same as that of the first embodiment, so that only a concrete example of the control under illuminance condition, in which image blurring possibly occurs, and degradation of image quality due to noise is recognized, will be described with reference to Fig. 18. The descriptions of components, whose controls are the same as those of Fig. 2 in the first embodiment, have been omitted.

The synthesizing unit, for example, acquires the moving area information from the image information 1 of the first image and the image information 2 of the second image simultaneously to synthesizing, converts the moving area information to the multiplier coefficient, and outputs the multiplier coefficient to the fifth synthesizing means with variable synthesizing ratio (1810). The fifth synthesizing means with variable synthesizing ratio (1810) carries out multiplication of the image information to the respective multiplier coefficients, and the adder (1813) carries out addition.

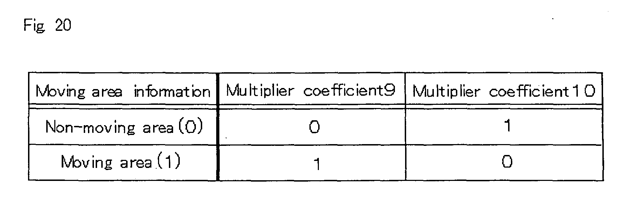

With reference to Fig. 20, the outline in cases where synthesizing is carried out by means of the first image and the second images in the synthesizing unit is described. Fig. 20 shows the control of conversion to the multiplier coefficient based on the moving area information acquired from the acquisition means for moving area information (1808).

At the outset, in the synthesizing of pixels, in which the moving area information indicates non-moving area, for example, as shown in Fig. 20, the multiplier coefficient 9 (for the first image, and not indicated in Fig. 18) of the multiplier 1 (1811) is set to 0, and the multiplier coefficient 10 (for the second image, and not indicated in Fig. 18) of the multiplier 2 (1812) is set to 1. In the fifth synthesizing means with variable synthesizing ratio (1810) of the synthesizing unit (1504), the multiplication for the image information is carried out in the multiplier 1 (1811) and the multiplier 2 (1812) based on the multiplier coefficient acquired from the moving area information, thereby synthesizing an image in the adder (1813). Therefore, in the synthesizing unit (1804), as to the area determined as non-moving area, synthesizing by utilizing only the image information 2 is carried out, so that the synthesizing control, mainly having the property of the image information 2 as 'image, in which image blurring hardly occurs, but degradation of image quality due to noise is recognized, and the noises are increased by the gain amplification, thereby causing further degradation of image quality', is carried out.

Subsequently, in the synthesizing of pixels, in which the moving area information indicate moving area, for example, as shown in Fig. 20, the multiplier coefficient 9 (for the first image) of the multiplier 1 (1811) is set to 1, and the multiplier coefficient 10 (for the second image) of the multiplier 2 (1812) is set to 0. In the fifth synthesizing means with variable synthesizing ratio (1810) of the synthesizing unit (1504), the multiplication for the image information is carried out in the multiplier 1 (1811) and the multiplier 2 (1812) based on the multiplier coefficient acquired from the moving area information, thereby synthesizing an image in the adder (1813). Therefore, in the synthesizing unit (1804), as to the area determined as moving area, synthesizing by utilizing only the image information 1 is carried out, so that the synthesizing control, mainly having the property of the image information 1 as 'image, which have suppressed image blurring and low noise by averaging and pixel addition, but less high-frequency components due to its small size', is carried out

For example, in the non-moving area, by making the synthesizing ratio variable depending on the imaging condition, or by utilizing the image synthesized based on the edge information, it is possible to acquire an image, in which noise components in the moving area are further improved.

<Processing Flow of Sixth Embodiment>

The processing flow of the sixth embodiment is the same as that of the imaging apparatus of Fig. 6 in the first embodiment. Note that in the synthesizing of the first and second images in the synthesizing step (S0610), as described above, the synthesizing ratio between the plurality of images is variable depending on the moving area information.

<Brief Description of Effects of Sixth Embodiment>

In the sixth embodiment, in cases where the synthesizing of the second image in a state that gain is amplified is carried out in order to compensate for underexposure due to a short exposure time under a certain level of low-illuminance condition, it is possible to acquire moving area information from a plurality of images, and to carry out synthesizing, mainly having a property of image information 1 as 'image, which has suppressed image blurring and low noise by averaging and pixel addition, but less high-frequency components due to its small size' is carried out, thereby acquiring a high-quality image with suppressed noise in the moving area.

**<<Seventh embodiment>>**

<Concept of Seventh Embodiment>

In an imaging apparatus of a seventh embodiment, in cases where the synthesizing of the second image in a state that gain is amplified is carried out in order to compensate underexposure due to short exposure time under a certain level of low-illuminance condition, it is possible to carry out synthesizing brightness information and color information separately, thereby acquiring an image with suppressed noise, processed by image blurring correction, according to occurrence of brightness noise or of color noise.

<Configuration of Seventh Embodiment>

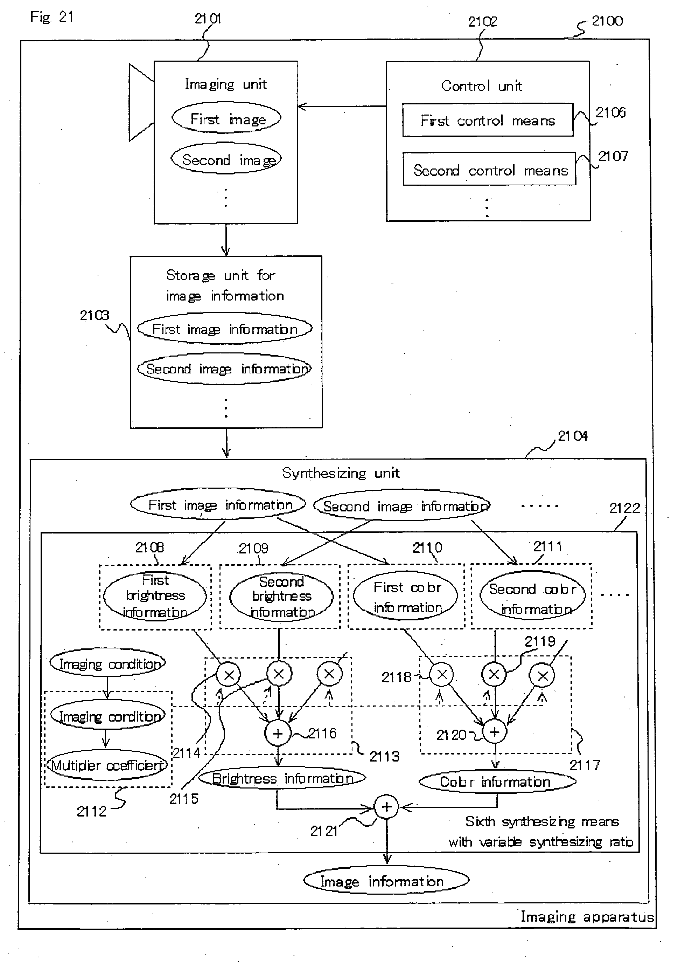

Fig. 21 is a functional block diagram of an imaging apparatus of the seventh embodiment. The imaging apparatus of the seventh embodiment comprises a 'sixth synthesizing means with variable synthesizing ratio' (2122) in addition to the configuration of the imaging apparatus in any one of the first to sixth embodiments. Fig. 21 shows a configuration, in which the sixth synthesizing means with variable synthesizing ratio (2122) is added to the configuration of the imaging apparatus in Fig. 2 of the first embodiment. The imaging apparatus (2100) comprises an 'imaging unit' (2101), a 'control unit' (2102), a 'storage unit for image information' (2103), and a 'synthesizing unit' (2104), and the control unit (2102) may comprise a 'first control means' (2106), and a 'second control means' (2107). In addition, the synthesizing unit (2104) comprises the 'sixth synthesizing means with variable synthesizing ratio' (2122), and the 'fifth synthesizing means with variable synthesizing ratio' (1810). As to the components same as those in any one of the first to sixth embodiments, descriptions are omitted.

The 'sixth synthesizing means with variable synthesizing ratio' (2122) has a function of synthesizing the brightness component and color component with the same synthesizing ratio or with a different synthesizing ratio.

For example, the respective multiplier coefficients (2112) acquired from the imaging condition are inputted, the multiplication of the first brightness information (2108) acquired from the image information 1 and the second brightness information (2109) acquired from the image information 2 by the respective multiplier coefficients are carried out, and addition is carried out in the brightness adder (2116), thereby synthesizing the brightness information. Moreover, the respective multiplier coefficients acquired from the imaging condition are inputted, the multiplication of the first color information (2110) acquired from the image information 1 and the second color information (2111) acquired from the image information 2 by the respective multiplier coefficients are carried out, and addition is carried out in the color adder (2120), thereby synthesizing the color information. Furthermore, the brightness information after the synthesizing and the color information after the synthesizing are synthesized (2121).

(Concrete example of control under illuminance condition, in which image blurring possibly occurs)

In the seventh embodiment, the control under illuminance condition, in which image blurring hardly occurs, is the same as that of the first embodiment, so that only concrete example of the control under illuminance condition, in which image blurring possibly occurs, will be described with reference to Fig. 21. The descriptions of components, whose controls are the same as those in any one of the first to sixth embodiments, are omitted.

For example, when synthesizing by partially utilizing the image information of the image information 1 and the imaging condition 1 and the image information 2 and the imaging condition 2 regarding the first image outputted from the storage unit for image information (2103), the synthesizing unit can carry out synthesizing of the brightness information and the color information separately.

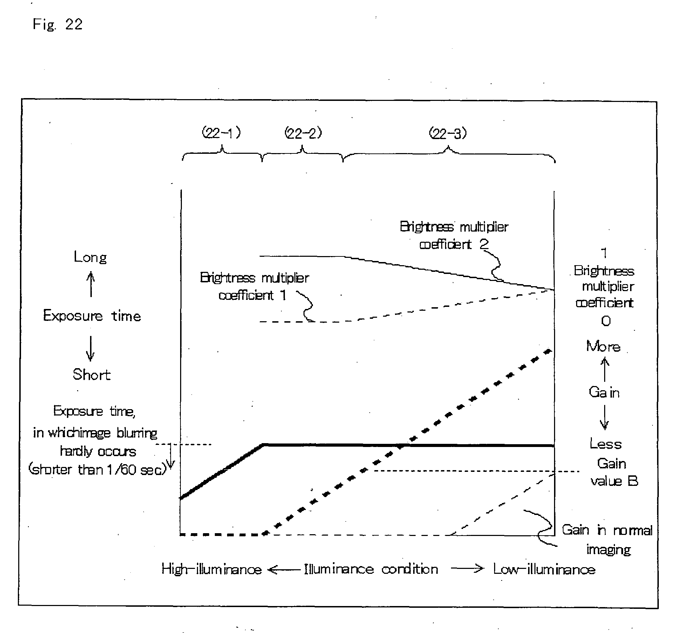

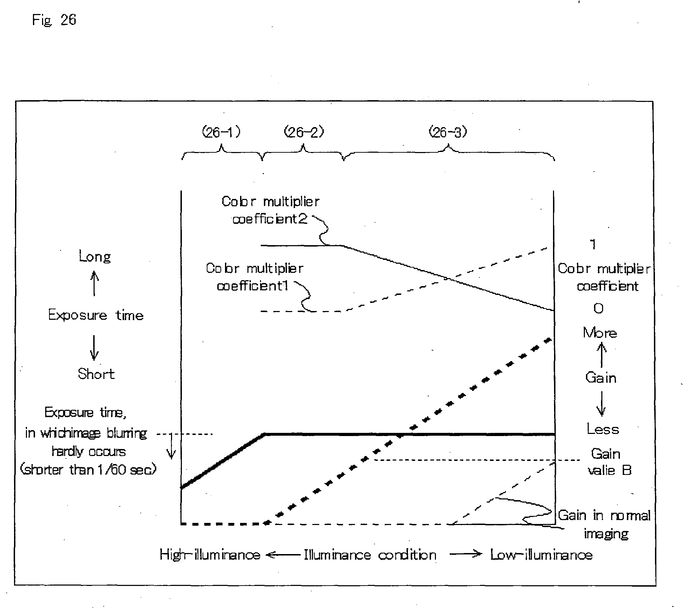

With reference to Figs. 22 and 26, the outline in cases where synthesizing is carried out by means of the first image and the second images in the synthesizing unit is described. Figs. 22 and 26 show a state, in which the 'second control means' (2107) in the control unit (2102) carries out the control according to the illuminance condition, so that the second image, one image other than the plurality of images to be imaged, is imaged in the exposure time, in which no image blurring occurs, and with adequate exposure by amplifying gain. In addition, Figs shows the control of conversion to the multiplier coefficient based on the acquired imaging condition.

At the outset, under the middle-illuminance condition, which is slightly darker than the high-illuminance condition (22-1, 26-1), the exposure time is controlled to be longer than 1/60 sec. in the first control means (2106) (22-2, 26-2), and the control corresponds to the 'control under the illuminance condition, in which the image blurring possibly occurs' as described in the first embodiment. The control by the first control means (2106) is the same as that of the first embodiment, so that the control by the second control means (2107) will be described.

In the second control means, for example, the exposure time, in which no image blurring occurs, therefore, the exposure time 1/60 sec. is maintained, thereby controlling the exposure time for suppressing the image blurring (22-2, 26-2). In addition, the second control means (2107) amplifies gain to compensate underexposure due to the maintenance of the exposure time 1/60 sec, thereby acquiring adequate exposure. In addition, if the imaging condition shifts to the low-illuminance condition, further amplification of the gain is carried out in order to acquire adequate exposure. At a specific gain value, degradation of image quality due to increasing noise by the amplification of gain is recognized (22-4, 26-4).

When converting (2112) the imaging condition to the multiplier coefficient, for example, as shown in the upper portion of Figs. 22 and 26, from the state, in which the exposure time is controlled to longer than 1/60 sec., to the state, in which the gain value is controlled to be a value, at which the degradation of image quality due to increasing noise caused by the gain amplification is recognized (in the exposure control state under middle-illuminance as shown in Figs. 22-2 and 26-2), the brightness multiplier coefficient 1 (for the first image, not indicated in Fig. 21) of the brightness multiplier 1 (2114) is set to 0, and the brightness multiplier coefficient 2 (for the second image, not indicated in Fig. 21) of the brightness multiplier 2 (2115) is set to 1, the color multiplier coefficient 1 (for the first image, not indicated in Fig. 21) of the color multiplier 1 (2118) is set to 0, and the color multiplier coefficient 2 (for the second image, not indicated in Fig. 21) of the color multiplier 2 (2115) is set to 1.

In addition, in the synthesizing unit, based on the coefficient acquired by converting the imaging condition to the multiplier coefficient (2112), multiplication of the brightness information is carried out in the brightness multiplier 1 (2114) and brightness multiplier 2 (2115), and the brightness information is synthesized in the brightness adder (2116). Moreover, based on the coefficient acquired by converting the imaging condition to the multiplier coefficient (2112), multiplication of the color information is carried out in the color multiplier 1 (2118) and color multiplier 2 (2119), and the color information is synthesized in the color adder (2120). Moreover, the brightness information after the synthesizing and the color information after the synthesizing are synthesized. Therefore, in the synthesizing unit (2104), synthesizing by utilizing only the image information 2 is carried out, so that the control mainly having the property of the image information 2 as 'image, in which image blurring hardly occurs, and degradation of image quality due to noise is not recognized' is carried out

Subsequently, under the low-illuminance condition darker than the above illuminance condition, the second control means (2107) continuously maintains the 'exposure time, in which no image blurring occurs', therefore, the exposure time 1/60 sec. (22-3, 26-3). Hereat, the second control means (2107) further amplifies gain more than that in the control state of gain (gain value B), in which the degradation of image quality due to increasing noise caused by the gain amplification is recognized, in order to compensate underexposure due to the maintenance of the exposure time 1/60 sec, thereby acquiring adequate exposure.

When converting (2112) the imaging condition to the multiplier coefficient, for example, as shown in the upper portion of Figs. 22 and 26, from the state, in which the gain value is controlled to be a value, at which the degradation of image quality due to increasing noise caused by the gain amplification is recognized, to the state, in which the exposure control is maximum (in the exposure control state under low-illuminance as shown in 22-3 and 26-3), the brightness multiplier coefficient 1 (for the first image) of the brightness multiplier 1 (2114) is varied from 0 to 0.5, and the brightness multiplier coefficient 2 (for the second image) of the brightness multiplier 2 (2115) is varied from 1 to 0.5 in increments. Similarly, the color multiplier coefficient 1 (for the first image) of the color multiplier 1 (2118) is varied from 0 to 1, and the color multiplier coefficient 2 (for the second image) of the color multiplier 2 (2119) is varied from 1 to 0 in increments.

In the synthesizing unit, based on the coefficient acquired by converting the imaging condition to the multiplier coefficient (2112), multiplication of the color information is carried out in the color multiplier 1 (2118) and color multiplier 2 (2119), and the color information is synthesized in the color adder (2120). Moreover, the brightness information after the synthesizing and the color information after the synthesizing are synthesized. Therefore, in the synthesizing unit, as the illuminance lowers, more information from the image information 1 than information from the image information 2 is mainly used for the synthesizing, so that usage ratio of the image information 2 having the property as 'image, in which less image blurring is included, but degradation of image quality due to noise is recognized, and the degradation of image quality becomes worse due to noise increasing by the gain amplification' is lowered, and control is carried out in order to acquire mainly an image having the property of the image information 1 as 'image, which has suppressed image blurring, small size, and low noise'.

In the above control, as to the variation of weight of using the color information of the image information 2, as the illuminance lowers, the variation of weight of using the image information 2 becomes larger, so that under the low-illuminance condition, not the brightness information but the color information is synthesized by utilizing the image information 1 with low-noise. Therefore, in cases where the color information of the image information 2 includes many color noises, it is possible to acquire an image with low-color noise, corrected by image blurring correction.

In the above example, the case where the color information of the image information 2 includes many color noises has been described. However, in cases where the color information includes few color noises, but the brightness information includes many brightness noises, by reversing the variation of the multiplier coefficient to be used, it is possible to acquire an image with brightness-color noise, corrected by image blurring correction.

Moreover, in the above example, as to the illuminance condition, in which the synthesizing ration between the image information 1 and the image information 2 is varied, the control of multiplier coefficient for the brightness information the control of multiplier coefficient for the color information is carried out under the same illuminance condition. However, in cases where there is a difference of noise amount increased by the gain amplification between the brightness information and the color information, the control of multiplier coefficient for the brightness information the control of multiplier coefficient for the color information is carried out under the different illuminance condition

Note that the degree of the variation of the multiplier coefficient is to be appropriately see depending on the state of the image information 1 and 2, and the control may be carried out by other values than the above values.

Moreover, in this embodiment, the brightness multiplier coefficient to be set to the brightness multiplier coefficient 1 of the brightness multiplier 1 (2114) and the brightness multiplier coefficient to be set to the multiplier coefficient 2 of the brightness multiplier 2 (2115) have been described separately, and the color multiplier coefficient to be set to the color multiplier coefficient 1 of the color multiplier 1 (2118) and the color multiplier coefficient to be set to the multiplier coefficient 2 of the color multiplier 2 (2119) have been described separately.

However, the brightness multiplier coefficient 2 of the brightness multiplier 2 (2115) may be defined as a value acquired by subtracting the brightness multiplier coefficient 1 of the brightness multiplier 1 (2114) from 1, and the color multiplier coefficient 2 of the color multiplier 2 (2119) may be defined as a value acquired by subtracting the color multiplier coefficient 1 of the color multiplier 1 (2118) from 1.

<Processing Flow of Seventh Embodiment>

The processing flow of the seventh embodiment is the same as that of the imaging apparatus of Fig. 6 in the first embodiment. Note that in the synthesizing of the first and second images in the synthesizing step (S0610), as described above, it is possible to separately synthesize the brightness information and the color information depending on the imaging condition.

<Brief Description of Effects of Seventh Embodiment>

In the seventh embodiment, when synthesizing the image information of one image by partially utilizing the image information of the plurality of images, thereby correcting image blurring under a certain level of low-illuminance condition, it is possible to carry out synthesizing brightness information and color information separately, thereby acquiring an image with suppressed noise, processed by image blurring correction, according to occurrence of brightness noise or of color noise.

**Claims**

1. An imaging apparatus, comprising:

   an imaging unit;
   a control unit, which controls imaging according to imaging condition including exposure time and gain, which vary depending on brightness;
   a storage unit for image information, which stores image information of one or a plurality of images imaged under various imaging conditions controlled by the control unit; and
   a synthesizing unit, which synthesizes image information for a synthesized image by partially utilizing the stored image information of the plurality of images, or outputs an image with no change, imaged under the imaging condition, according to the brightness.

2. The imaging apparatus according to Claim 1, wherein said control unit comprises

   first control means, which carries out control so that a first image, one of a plurality of images to be imaged, has smaller size than other images of the plurality images, and is imaged with adequate exposure, and
   second control means, which carries out control by reducing the exposure time and by amplifying the gain so that a second image, one of a plurality of images to be imaged, is imaged with adequate exposure.

3. The imaging apparatus according to Claim 2, wherein said first control means carries out control, such that the first image, one of the plurality of images to be imaged, has smaller size than other images of the plurality images by pixel averaging or pixel addition, and the exposure time is reduced according to S/N ratio improved by the pixel averaging or pixel addition.

4. The imaging apparatus according to any one of Claims 1 to 3, wherein said synthesizing unit comprises

   first synthesizing means with variable synthesizing ratio, which determines a synthesizing ratio upon synthesizing image information of the synthesized image by partially utilizing said image information of the plurality of images, the synthesizing ratio is variable according to one or more imaging conditions of the plurality of images.

5. The imaging apparatus according to any one of Claims 1 to 4, wherein said synthesizing unit comprises

   acquisition means for brightness information, which acquires brightness information from the one or plurality of images stored in said storage unit for image information, and
   second synthesizing means with variable synthesizing ratio, which determines a synthesizing ratio upon synthesizing image information of the synthesized image by partially utilizing said image information of the plurality of images, the synthesizing ratio is variable according to said brightness information.

6. The imaging apparatus according to any one of Claims 1 to 5, further comprising:

   an acquisition unit for temperature, which is capable of measuring a temperature of said imaging unit; and
   a storage unit for temperature information, which stores the temperature information acquired by said acquisition unit for temperature, wherein said synthesizing unit comprises

      third synthesizing means with variable synthesizing ratio, which determines a synthesizing ratio upon synthesizing image information of the synthesized image by partially utilizing said image information of the plurality of images, the synthesizing ratio is variable according to said temperature information.

7. The imaging apparatus according to any one of Claims 1 to 6, wherein said synthesizing unit comprises

   acquisition means for edge information, which acquires edge information from the one or plurality of images stored in said storage unit for image information, and
   fourth synthesizing means with variable synthesizing ratio, which determines a synthesizing ratio upon synthesizing image information of the synthesized image by partially utilizing said image information of the plurality of images, the synthesizing ratio is variable according to said edge information.

**8.** The imaging apparatus according to Claim 2 or 3, wherein said synthesizing unit comprises

acquisition means for moving area information, which acquires moving area information from the plurality of images stored in said storage unit for image information, and

fifth synthesizing means with variable synthesizing ratio, which determines a synthesizing ratio upon synthesizing image information of the synthesized image by partially utilizing said image information of the plurality of images, and carries out control so that said first image is utilized in a moving area of the second image, which has been determined as a moving area based on said moving area information, and said second image is utilized in a non-moving area of the second image, which has been determined as a region excluding the moving area based on said moving area information.

**9.** The imaging apparatus according to any one of Claims 1 to 8 wherein said synthesizing unit comprises

sixth synthesizing means with variable synthesizing ratio, which determines a synthesizing ratio upon synthesizing image information of the synthesized image by partially utilizing said image information of the plurality of images, and is capable of synthesizing the brightness component and color component with the same synthesizing ratio or with a different synthesizing ratio.

**10.** An imaging method, comprising:

imaging;

controlling said imaging according to imaging condition including exposure time and gain, which vary depending on brightness;

storing image information, which stores image information of one or a plurality of images imaged under various imaging conditions controlled by the control unit; and

synthesizing, which synthesizes image information of a synthesized image by partially utilizing the stored image information of the plurality of images, or outputs the image with no change, imaged under the imaging condition, according to the brightness.

Fig. 1

0101

0102

0103

0104

Imaging unit

First image

Second image

⋮

Control unit

Storage unit for image information

First image information

Second image information

⋮

Synthesizing unit

First image information    Second image information    · · · · ·

Image information

Imaging apparatus

0100

Fig. 2

Fig. 3

Fig. 4

Fig. 5

Pw

Ph

Sw

Sh

(x', y')

(x, y)

0501

0502

Fig. 6

```
                        ┌─────────────┐
                        │    START    │
                        └──────┬──────┘
                               ↓
              ┌────────────────────────────────┐
              │   Control of imaging condition │ ⌇ S0601
              └────────────────┬───────────────┘
                               ↓
                                           S0603
      YES      ╱─────────────────────────────╲     NO
        ┌─────<  Exposure time is exposure time, >─────┐
        │       ╲ in which image blurring hardly occurs?╱      │
 S0611  │         ╲─────────────────────────────╱        │ S0604
        ↓                                                 ↓
┌─────────────────────────────┐        ┌─────────────────────────────┐
│ Control of imaging condition│        │ Control of imaging condition│
│      of first image         │        │      of first image         │
└──────────────┬──────────────┘        └──────────────┬──────────────┘
               ↓ S0612                                 ↓ S0605
┌─────────────────────────────┐        ┌─────────────────────────────┐
│    Imaging of first image   │        │    Imaging of first image   │
└──────────────┬──────────────┘        └──────────────┬──────────────┘
               ↓ S0613                                 ↓ S0606
┌─────────────────────────────┐        ┌─────────────────────────────┐
│ Storage of image information│        │ Storage of image information│
│       of first image        │        │       of first image        │
└──────────────┬──────────────┘        └──────────────┬──────────────┘
               │                                       ↓ S0607
               │                        ┌─────────────────────────────┐
               │                        │ Control of imaging condition│
               │                        │      of second image        │
               │                        └──────────────┬──────────────┘
               │                                       ↓ S0608
               │                        ┌─────────────────────────────┐
               │                        │   Imaging of second image   │
               │                        └──────────────┬──────────────┘
               │                                       ↓ S0609
               │                        ┌─────────────────────────────┐
               │                        │ Storage of image information│
               │                        │       of second image       │
               │                        └──────────────┬──────────────┘
               │              S0614                    ↓ S0610
┌──────────────┴──────────────┐        ┌─────────────────────────────┐
│    Output of first image    │        │ Synthesizing of first image │
│                             │        │      and second image       │
└──────────────┬──────────────┘        └──────────────┬──────────────┘
               │                                       │
               └───────────────────┬───────────────────┘
                                   ↓
                        ┌─────────────┐
                        │     END     │
                        └─────────────┘
```

Fig. 7

0707 0708 0709 0710 0711 0701

Lens

C
C
D

CDS/
AGC

A/D
converter

Image processor

Gamma processing mechanism

0712

Imaging apparatus

0702

CPU

0703

Temporary
memory

0704

Storage
device

0706

Monitor

0705

Image output
unit

Fig. 8

Fig. 9

Fig. 10

Fig. 11

Fig. 12

Fig. 13

Fig. 14

START

Control of imaging condition ⎯⎯ S1401

Acquisition of temperature information ⎯⎯ S1415

Storage of temperature information ⎯⎯ S1416

S1403

YES ◁ Exposure time is exposure time, in which image blurring hardly occurs? ▷ NO

S1411

Control of imaging condition of first image

S1412

Imaging of first image

S1413

Storage of image information of first image

S1404

Control of imaging condition of first image

S1405

Imaging of first image

S1406

Storage of image information of first image

S1407

Control of imaging condition of second image

S1408

Imaging of second image

S1409

Storage of image information of second image

S1410

Synthesizing of first image and second image

S1414

Output of first image

END

Fig. 15

Imaging apparatus

Fig. 16

| | | |
|---|---|---|
| −1 | −1 | −1 |
| −1 | 8 | −1 |
| −1 | −1 | −1 |

1601

Fig. 17

Fig. 18

Fig 19

Reduction means ~ 1903

Means for absolute value ~ 1906

Binarization means ~ 1907

Fig. 20

| Moving area information | Multiplier coefficient9 | Multiplier coefficient10 |
|---|---|---|
| Non-moving area (0) | 0 | 1 |
| Moving area (1) | 1 | 0 |

Fig. 21

Fig. 22

Fig 23

Fig 24

(a)

2401

2402

(b)

2401

2402

Fig. 25

P(k, l)                                P(k+1, l)

P(k+u, l+v)
||
P(x', y')

P(k, l+1)                              P(k+1, l+1)

Fig. 26

**EP 2 018 048 A1**

| INTERNATIONAL SEARCH REPORT | International application No. |
|---|---|
| | PCT/JP2007/058298 |

A. CLASSIFICATION OF SUBJECT MATTER
*H04N5/232*(2006.01)i, *G03B5/00*(2006.01)i

According to International Patent Classification (IPC) or to both national classification and IPC

B. FIELDS SEARCHED

Minimum documentation searched (classification system followed by classification symbols)
H04N5/232, G03B5/00

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 6-141229 A  (Matsushita Electric Industrial Co., Ltd.), 20 May, 1994 (20.05.94), Claim 1; Par. Nos. [0021], [0027], [0040] & US 5455621 A1         & EP 595299 A2 | 1,4,5,7,9,10 |
| X | JP 2005-65119 A  (Hitachi, Ltd.), 10 March, 2005 (10.03.05), Par. Nos. [0006] to [0008], [0015] to [0017], [0047] (Family: none) | 1,5,9,10 |
| X | JP 2003-173438 A  (Minolta Co., Ltd.), 20 June, 2003 (20.06.03), Claims 1, 2; Par. Nos. [0024], [0047], [0048], [0051] (Family: none) | 1,9,10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 June, 2007 (28.06.07) | 10 July, 2007 (10.07.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2007/058298 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2003-319240 A  (Olympus Optical Co., Ltd.),<br>07 November, 2003 (07.11.03),<br>Par. No. [0015]<br>& US 2004/0095472 A1    & CN 1452386 A | 1,9,10 |
| A | JP 2005-38396 A  (Sony Corp.),<br>10 February, 2005 (10.02.05),<br>Claim 8; Par. Nos. [0010], [0011], [0633]<br>& US 2006/0140507 A1    & EP 1638340 A1<br>& WO 2004/114677 A1 | 1-10 |
| A | JP 2004-328530 A  (Konica Minolta Photo Imaging Kabushiki Kaisha),<br>18 November, 2004 (18.11.04),<br>Claim 1<br>(Family: none) | 1-10 |
| A | JP 2004-328137 A  (Konica Minolta Photo Imaging Kabushiki Kaisha),<br>18 November, 2004 (18.11.04),<br>Claim 1; Par. No. [0008]<br>(Family: none) | 1-10 |
| A | JP 2003-333422 A  (Fuji Photo Film Co., Ltd.),<br>21 November, 2003 (21.11.03),<br>Claim 1<br>(Family: none) | 1-10 |
| A | JP 2003-274281 A  (Canon Inc.),<br>26 September, 2003 (26.09.03),<br>Par. Nos. [0002] to [0018]<br>(Family: none) | 1-10 |
| A | JP 2003-259226 A  (Olympus Optical Co., Ltd.),<br>12 September, 2003 (12.09.03),<br>Claim 1<br>(Family: none) | 1-10 |
| A | JP 2000-125209 A  (Fuji Photo Film Co., Ltd.),<br>28 April, 2000 (28.04.00),<br>Claim 18<br>& US 6831692 B1 | 1-10 |
| A | JP 2001-8104 A  (Fuji Photo Film Co., Ltd.),<br>12 January, 2001 (12.01.01),<br>Claim 4<br>(Family: none) | 1-10 |
| A | JP 8-37628 A  (Canon Inc.),<br>26 February, 1996 (26.02.96),<br>Claim 6<br>& US 7095434 B | 1-10 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005209249 A
- JP 2004235901 A